# EUROPEAN PATENT APPLICATION

(11) **EP 3 989 619 A1**
(43) Date of publication of application: **27.04.2022**
(21) Application number: 21204138.8
(22) Date of filing: 22.10.2021
(51) Int. Cl.: H04W 12/02

(54) **METHODS AND SYSTEMS FOR MONITORING COMMUNICATION DEVICE MOBILITY ASSOCIATED WITH VENUE WIRELESS ACCESS NETWORKS**

(30) Priority: 23.10.2020 US 202063104674 P; 17.12.2020 US 202017125302
(71) Applicant: Avaya Management L.P., Durham NC 27713 (US)
(72) Inventor: CHAVEZ, David, Colorado 80023 (US)
(74) Representative: Williams, David John

(57) **Abstract**

Methods and systems are provided that monitor and track a mobility of communication devices accessing wireless networks in a service federation. When a user of a communication device requests to connect to a wireless network and enrolls in a service federation, a unique key is generated for the communication device without using and collecting any personal data and device identifiers. The unique key is used by only a single communication device for which the unique key was generated and cannot be shared or reassigned. Whenever this unique key is used to access any wireless network in the service federation, data associated with the usage of the unique key is stored in memory. A server stores this information and then generates a mobility report, outlining travel behaviors over time, for each unique key in the service federation and, in turn, the users of the communication devices.

## Description

### CROSS REFERENCE TO RELATED APPLICATION

The present application claims the benefit of and priority, under 35 U.S.C. § 119(e), to U.S. Provisional Application Serial No. 63/104,674, filed October 23, 2020, entitled "MOBILE FREE WI-FI INFORMATION SERVICE," the entire disclosure of which is hereby incorporated herein by reference, in its entirety, for all that it teaches and for all purposes.

### BACKGROUND

The present disclosure is generally directed to network access monitoring, in particular, toward monitoring the mobility of devices accessing wireless networks of venues in a federation.

Many venues individually offer free access to Wi-Fi, and associated wireless network equipment, for patrons or for people who are in proximity to the venue's respective wireless network. This Wi-Fi access is typically limited to a single venue and is an operating cost for the owner or operator of the venue. In an attempt to offset the operational costs of providing free Wi-Fi, some have described collecting location data associated with specific identified mobile devices. Using this collected location data, statistics may be calculated to determine common patrons among venues, and venues can learn more about users who access their networks. This data and information may be sold or otherwise monetized by the venue.

The device identifiers obtained from mobile devices may correspond, for example, to assigned Globally Unique Identifiers or the Media Access Control ("MAC") addresses of the mobile devices. These device identifiers are considered personal data by a number of recently passed data protection regulations and, as such, are subject to strict data collection and privacy rules.

As a result of the data protection regulations, new mobile device operating systems have enabled, or proposed enabling, privacy controls that occasionally scramble a device identifier, hardware identification, advertising identification, and/or other personal data associated with a mobile device. This scrambling feature changes the static device identifier of a mobile device into dynamic device identifier that cannot be relied upon to track location data of the mobile device over time.

### BRIEF DESCRIPTION OF THE DRAWINGS

Fig. 1 depicts a block diagram of a communication system in accordance with at least some embodiments of the present disclosure;
Fig. 2 is a block diagram depicting components of a communication device used in a communication system in accordance with at least some embodiments of the present disclosure;
Fig. 3 is a block diagram depicting a venue registration data structure used in accordance with embodiments of the present disclosure;
Fig. 4 is a block diagram depicting a device key data structure used in accordance with embodiments of the present disclosure;
Fig. 5 is a diagram depicting a set of communication flows in accordance with at least some embodiments of the present disclosure;
Fig. 6A is a block diagram depicting an access registration interface presentation in accordance with embodiments of the present disclosure;
Fig. 6B is a block diagram depicting an access survey interface presentation in accordance with embodiments of the present disclosure;
Fig. 6C is a block diagram depicting an access reward interface presentation in accordance with embodiments of the present disclosure;
Fig. 7 is a flow diagram depicting a method of enrolling a communication device with a federated wireless access service in accordance with at least some embodiments of the present disclosure;
Fig. 8 is a flow diagram depicting a method of granting wireless network access for the communication device enrolled in the federated wireless access service in accordance with embodiments of the present disclosure;
Fig. 9 is a flow diagram depicting a method of monitoring and interacting with the communication device enrolled in the federated wireless access service in accordance with embodiments of the present disclosure;
Fig. 10 is a flow diagram depicting a method of mapping a mobility of the communication device enrolled in the federated wireless access service in accordance with embodiments of the present disclosure; and
Fig. 11 is a block diagram depicting a mapped mobility behavior report in accordance with embodiments of the present disclosure.

### DETAILED DESCRIPTION

In the following description, for the purposes of explanation, numerous specific details are set forth in order to provide a thorough understanding of various embodiments disclosed herein. It will be apparent, however, to one skilled in the art that various embodiments of the present disclosure may be practiced without some of these specific details. The ensuing description provides exemplary embodiments only, and is not intended to limit the scope or applicability of the disclosure. Furthermore, to avoid unnecessarily obscuring the present disclosure, the preceding description omits a number of known structures and devices. This omission is not to be construed as a limitation of the scope of the claims. Rather, the ensuing description of the exemplary embodiments will provide those skilled in the art with an enabling description for implementing an exemplary embodiment. It should however be appreciated that the present disclosure may be practiced in a variety of ways beyond the specific detail set forth herein.

It is with respect to the above issues and other problems that the embodiments presented herein were contemplated. It is an object of the present disclosure to obviate the need for anonymizing data and to provide rich mobility information surrounding the access of wireless networks without compromising the privacy of a user. The present disclosure provides an easy-access mechanism by which a mobile user is authorized to get Wi-Fi service (presumably for free) to a large number of disparate venues. In return for providing free Wi-Fi service, the user agrees to opt-in for providing feedback on services and venues and may be further rewarded with digital certificates, coupons, and/or the like. In some embodiments, the methods and systems described herein do not require any software to be downloaded to a communication device to allow registration, or enrollment, with a wireless network federation server.

The methods described herein may begin when a communication device of a user enters a venue (e.g., wireless network range, etc.) that supports a Wi-Fi service offer. The venue may have signs directing the user to use the available Wi-Fi network. In some embodiments, the landing page of the Wi-Fi network for the venue can offer the user a preferred option of being securely linked to the service at the venue and a very large list of venues with an opt-in page. This opt-in page may be rendered to the display of the user's communication device (e.g., as a page displayed by a browser application running on the communication device, via a pop-up, etc.). In the event that the user opts in, a message may be sent to the service federation of venues (e.g., a service federation server, etc.) which may be instantiated centrally or in the cloud. This message may be sent from the communication device of the user.

The server (e.g., on the cloud) may provide a globally unique password that will be associated, or paired, with a list of private Wi-Fi Service Set Identifiers ("SSIDs") that span the list of venues that are part of a service federation. In some embodiments, the pairing may have a time to live ("TTL") from a security perspective. Upon receipt of the password and the SSID list, the communication device of the user can cache the one or more SSIDs and security code credentials, and then use these credentials to securely associate with the venue's Wi-Fi service. Depending on the configuration desired by the venue operator, the communication device of the user may be presented with a survey directing attention to services, offers, and/or some other requested response from the user. This survey may be presented as a pop-up, as part of a web page, or by some other page rendered by a browser application of the communication device.

In some embodiments, when the communication device of the user subsequently visits a venue that is part of the federation and where a Wi-Fi service is active, the communication device may then attempt to use the cached SSID and security code. In response, the service federation may be notified, and potentially a new password (and, depending on the venue's configuration, a new TTL, etc.) may be assigned to the communication device. In some embodiments, the communication device of the user may be offered a survey and/or a reward offer based on the current visit or based on any previous visit. At the end of each survey, or reward, an option may be presented to the display of the communication device that, when selected, allows the user to delete the information on themselves (e.g., communication device mobility, communication device usage while connected, historical data, wireless networks accessed, etc.) and essentially be "forgotten" by the service federation and server. The user may re-enroll at supported venues in the future if so desired.

Digital survey data may be associated by venue and federation (e.g., in real time) to a digital contact center associated with the venue and/or a parent of the venue. In one embodiment, while the communication device remains securely connected (e.g., over the wireless network, etc.) in the venue, a digital interaction may be supported post survey. In some embodiments, a system and method is described that is configured to provide multi-venue free Wi-Fi service to customers and may present survey, offer, and/or reward information in exchange for digital certificates and thus provide a richer data set)to service providers (e.g., venue owners, operators, etc.).

In some embodiments, a venue may subscribe to a Wi-Fi service federation. The Wi-Fi service federation may comprise a group of different venues, each having a different owner, operator, geographical location, and/or associated business, that are formed as a cooperative in data sharing. In one embodiment, at least two venues subscribed to Wi-Fi service federation may represent different types of businesses owned and/or operated by different entities at different geographical locations. In some embodiments, these at least two venues would not ordinarily share data and may be completely independent of one another from an ownership as well as an administrative perspective.

The Wi-Fi service federation may comprise members (e.g., a list of subscribing venues, operators of the venues, owners of the venues, etc.) that are part of a group associated with a specific region (e.g., state, city, county, etc.), part of a group associated with a nationwide region, and/or part of a group associated with an international (e.g., global) region.

In any event, once a communication device of a user enters the communications range of a wireless network associated with a venue that is part of a Wi-Fi service federation, and attempts to connect to the wireless network, a Wi-Fi landing page may be presented to the display of the communication device. The Wi-Fi landing page may be rendered as part of a web browser application running on the communication device and may provide options that allow the user to access the wireless network for the venue via the communication device. In some embodiments, the landing page may provide an option (e.g., an opt-in selection box, etc.) for the user to enroll, or register with, their device with the Wi-Fi service federation.

When the user selects this enrollment option a message may be sent (e.g., from the communication device) to a Wi-Fi service federation server that requests connection. In response, the Wi-Fi service federation server may generate authentication credentials that are uniquely created for the communication device at the time of the connection request. These authentication credentials may comprise a unique encryption key that can be used with the SSIDs of any venue that have subscribed to the Wi-Fi service federation and that is not used by any other communication device. The encryption key is not based on and is not associated with any device identifier of the communication device, or any other personally identifiable information associated with the user of the communication device. In fact, the encryption key is completely unique in the world, generated to be random, and is only associated with the list, or set, of SSIDs of the venues in the Wi-Fi service federation. Because the encryption key is controlled centrally (e.g., by the Wi-Fi service federation server, etc.) the key cannot be mapped back to a MAC address, GUID, phone number, International Mobile Equipment Identity ("IMEI"), or anything hardware-related with the communication device or personally identifying about the user of the communication device. As the encryption key is used to access one or more wireless networks at venues in the Wi-Fi service federation, information on mobility of the communication device can be collected, providing proximity and location information only, without any personal information. Among other things, the methods and systems described herein provide completely anonymous mobility tracking and mapping without the need to obtain or assign hardware identifiers for communication devices, without requiring any download of applications, without taking extra steps of anonymizing data (e.g., because no personal information is collected), and without collecting any personal or hardware identification information.

The encryption key generated by the Wi-Fi service federation server is provided to the communication device and may be stored as a password associated with a particular SSID or set of SSIDs by the native, or operating system, Wi-Fi management application of the communication device. The communication device only needs to remember the authentication key associated with the corresponding SSID.

The term "venue" as used herein, may refer to any site, area, or geographical region associated with an entity (e.g., a business, organization, governmental entity, individual, group of individuals, etc.) that comprises a wireless networking system capable of providing a wireless network for selective access by one or more users. Examples of venues may include, but are in no way limited to, hotels, conference centers, hospitals, parks, airports, shops, restaurants, businesses, etc., and/or combinations thereof.

The terms "Wi-Fi," "wireless," and variations thereof may be used interchangeably herein and may refer to any number of networking protocols that are used by communication devices to wirelessly communicate with and across a network and/or the Internet using radio waves and without requiring a direct (e.g., cabled, etc.) connection.

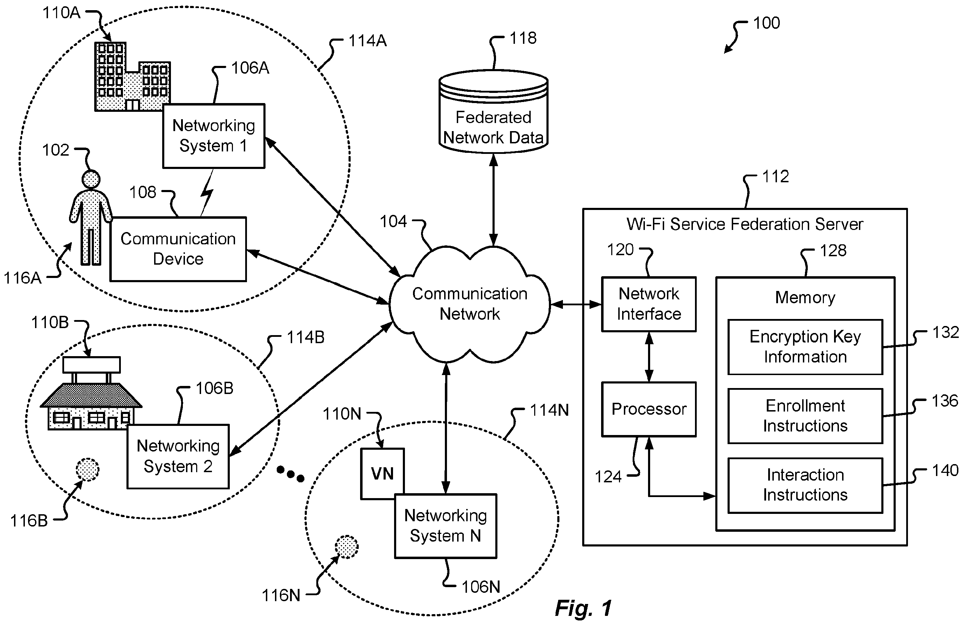

Referring now to Fig. 1, a block diagram of a communication system 100 is shown in accordance with at least some embodiments of the present disclosure. The communication system 100 of Fig. 1 may be a distributed system and, in some embodiments, may define a communications environment for a plurality of different venues 110A-110N that are part of a Wi-Fi service federation. The communication system 100 may include, but is not limited to, a communication device 108, one or more networking systems 106A-106N associated with respective venues 110A-110N, a Wi-Fi service federation server 112, and a federated network data database 118. The venues 110A-110N may correspond to different sites, areas, or geographical regions in an environment. In some embodiments, the communication devices 108 may communicatively connect to the conferencing server 112 over a wireless communication channel via a respective networking system 106A-106N and/or directly over a communication channel that is separate from the networking systems 106A-106N (e.g., via radio frequency cell, text, or messaging services, etc.), and vice versa.

In Fig. 1, a communication device 108 associated with a user 102 is shown within a first communication range 114A of a first networking system 106A for a first venue 110A. The first venue 110A may correspond to a business having a specific geographical location such. In this example, the user 102 is shown in the first geographical location 116A associated with the first venue 110A. For the sake of example, the first venue 110A may be a hotel where the user 102 may be staying or visiting and that provides Wi-Fi access via the first networking system 106A. When the user 102 and, more specifically, the communication device 108 moves to the second geographical location 116B, the communication device 108 may be out of the first communication range 114A but may be within the second communication range 114B of the second networking system 106B for the second venue 110B. The second venue 110B may correspond to a different type of venue from the first venue 110A. Continuing the example above, the second venue 110B may be a coffee shop that provides Wi-Fi access via the second networking system 106B. Each of the venues 110A-110N may be subscribed to a Wi-Fi service federation that is managed, at least in part, by the Wi-Fi service federation server 112. As the communication device 108 of the user 102 moves in the communication system 100 from one geographical location 116A-116N to another, the mobility behavior of the communication device 108 may be monitored, tracked, analyzed, and/or reported as described herein.

In accordance with at least some embodiments of the present disclosure, the communication network 104 may comprise any type of known communication medium or collection of communication media and may use any type of protocols to transport messages between endpoints. The communication network 104 may include wired and/or wireless communication technologies. The Internet is an example of the communication network 104 that constitutes an Internet Protocol ("IP") network consisting of many computers, computing networks, and other communication devices located all over the world, which are connected through many telephone systems and other means. Other examples of the communication network 104 include, without limitation, a standard Plain Old Telephone System ("POTS"), an Integrated Services Digital Network ("ISDN"), the Public Switched Telephone Network ("PSTN"), a Local Area Network ("LAN"), a Wide Area Network ("WAN"), a VoIP network, a Session Initiation Protocol ("SIP") network, a cellular network, and any other type of packet-switched or circuit-switched network known in the art. In addition, it can be appreciated that the communication network 104 need not be limited to any one network type, and instead may be comprised of a number of different networks and/or network types. The communication network 104 may comprise a number of different communication media such as coaxial cable, copper cable/wire, fiber-optic cable, antennas for transmitting/receiving wireless messages, and combinations thereof.

The networking systems 106A-106N may correspond to any equipment that enables communications over a wireless network wirelessly between devices in the communication system 100. The networking systems 106A-106N may each include a modem, a firewall, and a wireless router with at least one antenna that emits a wireless signal in a communication range 114A-114N of the wireless router. Wireless signals may be transmitted and received by the wireless router (e.g., from the communication device 108) and in turn sent or routed over the communication network 104 (e.g., the Internet, etc.). In some embodiments, the wireless router may send signals across the communication network 104 via the modem. Additionally or alternatively, the networking systems 106A-106N may include one or more switches, access points, servers, computers, and/or other nodes that form the wireless networks described herein. The SSIDs described herein may be associated with a particular wireless LAN that is created by a respective networking system 106A-106N. In some embodiments, the SSID may be stored in a memory of at least one wireless router in the networking systems 106A-106N.

In some embodiments, the communication device 108 may correspond to a computing device, a personal communication device, a portable communication device, a laptop, a smartphone, a tablet, a personal computer, and/or any other device capable of running an operating system ("OS"), at least one web browser application, or the like. The web browser application may be configured to exchange communications between a communication device 108 and the Wi-Fi service federation server 112. For instance, the communication device 108 may be configured to operate various versions of Microsoft Corp.'s Windows^{®} and/or Apple Corp.'s Macintosh^{®} operating systems, any of a variety of commercially-available UNIX^{®} such as LINUX or other UNIX-like operating systems, iOS, Android^{®}, etc. This communication device 108, may also have any of a variety of applications, including for example, voice applications, web browser applications, chat applications, video applications, social media applications, calling applications, email applications, calendar applications, Wi-Fi management applications, etc., and/or combinations thereof. Although shown with a single communication device 108 in the communication system 100, it should be appreciated that the communication system 100 may include any number of communication devices 108 associated with one or more users 102.

Additionally or alternatively, communications may be sent and/or received via a communication device 108 as a telephone call, a packet or collection of packets (e.g., IP packets transmitted over an IP network), an email message, an instant message ("IM"), a short message service ("SMS") message, a multimedia messaging service ("MMS") message, a chat, and/or combinations thereof. As shown in Fig. 1, the communication device 108 may communicate with a respective networking system 106A-106N wirelessly when in the respective wireless communication range 114A-114 of a particular venue 110A-110N and/or with the Wi-Fi service federation server 112 via the networking systems 106A-106N directly over the communication network 104.

As provided above, the venues 110A-110N shown in Fig. 1 may correspond to different geographical locations and businesses providing the wireless networks (e.g., via respective networking systems 106A-106N, etc.) and selective access to the same. The venues 110A-110N may each be members of a Wi-Fi service federation corresponding to a group of participating service providers. The Wi-Fi service federation may be associated with a particular geographical region and/or include two more different types of participating businesses. The venues 110A-110N may include one or more physical structures that house the components of the networking systems 106A-106N (e.g., wireless routers, modems, etc.).

The Wi-Fi service federation server 112 may include hardware and/or software resources that, among other things, provides the ability to centrally manage encryption keys for access to the wireless networks of the venues 110A-110N in a Wi-Fi service federation. The Wi-Fi service federation server 112 may include a network interface 120, a processor 124, and a memory 128. The Wi-Fi service federation server 112 may comprise encryption key information 132, enrollment instructions 136, interaction instructions 140, and/or the like.

The network interface 120 provides the Wi-Fi service federation server 112 with the ability to send and receive communication packets or the like over the communication network 104. The network interface 120 may be provided as a network interface card ("NIC"), a network port, a modem, drivers for the same, and the like. Communications between the components of the Wi-Fi service federation server 112 and other devices connected to the communication network 104 (e.g., for enrollment authorization, surveying, control, updates, etc.) may flow through the network interface 120 of the Wi-Fi service federation server 112. In some embodiments, examples of a suitable network interface 120 include, without limitation, an antenna, a driver circuit, an Ethernet port, a modulator/demodulator, an NIC, an RJ-11 port, an RJ-45 port, an RS-232 port, a USB port, etc. The network interface 120 may include one or multiple different network interfaces depending upon whether the Wi-Fi service federation server 112 is connecting to a single communication network or multiple different types of communication networks. For instance, the Wi-Fi service federation server 112 may be provided with both a wired network interface and a wireless network interface without departing from the scope of the present disclosure. In some embodiments, the network interface 120 may include different communications ports that interconnect with various input/output lines.

In some embodiments, the processor 124 may correspond to one or more computer processing devices. For example, the processor 124 may be provided as silicon, an Application-Specific Integrated Circuit ("ASIC"), as a Field Programmable Gate Array ("FPGA"), any other type of Integrated Circuit ("IC") chip, a collection of IC chips, and/or the like. In some embodiments, the processor 124 may be provided as a Central Processing Unit ("CPU"), a microprocessor, or a plurality of microprocessors that are configured to execute the instructions sets stored in memory 128. Upon executing the instruction sets stored in memory 128, the processor 124 enables various enrollment, key management, and/or interaction functions of the Wi-Fi service federation server 112, and provides updated enrollment and monitoring of communication device mobility for one or more communication devices 108 over the communication network 104.

The memory 128, or storage memory, may correspond to any type of non-transitory computer-readable medium. In some embodiments, the memory 128 may comprise volatile or non-volatile memory and a controller for the same. Non-limiting examples of the storage memory 128 that may be utilized in the Wi-Fi service federation server 112 may include Random Access Memory ("RAM"), Read Only Memory ("ROM"), buffer memory, flash memory, solid-state memory, or variants thereof. Any of these memory types may be considered non-transitory computer memory devices even though the data stored thereby can be changed one or more times. The memory 128 may be used to store information about generated encrypted keys, device enrollment information and status, mobility history, survey and reward history, time information, participating venues in a Wi-Fi service federation, and/or the like. In some embodiments, the memory 128 may be configured to store rules and/or the instruction sets depicted in addition to temporarily storing data for the processor 124 to execute various types of routines or functions. Although not depicted, the memory 128 may include instructions that enable the processor 124 to store data in the federated network data database 118 and retrieve information from the federated network data database 118. In some embodiments, the federated network data database 118, or data stored therein, may be stored internal to the Wi-Fi service federation server 112 (e.g., within the encryption key information 132 of the memory 128 of the Wi-Fi service federation server 112 rather than in a separate database, etc.) or in a separate server.

In some embodiments, the encryption key information 132 may be included in the Wi-Fi service federation server 112. The encryption key information 132 may be used to store information about each encryption key generated in response to a communication request received from a communication device 108. The encryption key information 132 may include each unique encryption key generated and an associated SSID, or set of SSIDs, for which each unique encryption key is valid. In some embodiments, the set of SSIDs may correspond to the SSIDs associated with each networking system 106A-106N in a Wi-Fi service federation. The information may be stored in the form of a list, table, database, or any organized collection of data.

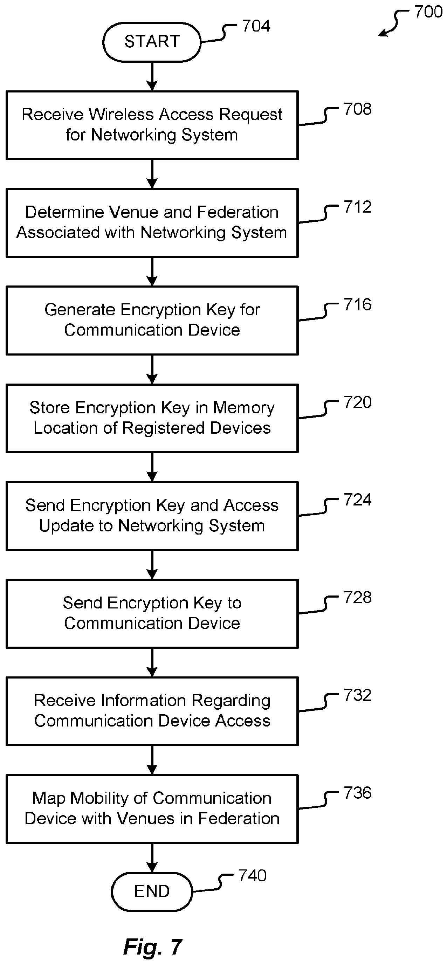

The Wi-Fi service federation server 112 may comprise enrollment instructions 136 that receive a connection request by a communication device 108 in the communication system 100, determine whether the communication device 108 has previously enrolled in the Wi-Fi service federation and/or has an expired encryption key, and enrolls the communication device with the Wi-Fi service federation. Enrollment may include referring to the data stored in the encryption key information 132 in the memory 128. For instance, the Wi-Fi service federation server 112 may determining whether any encryption key used by the communication device 108 is stored in the encryption key information 132. If the encryption key exists and has not expired, access for the communication device 108 using the encryption key is allowed and a mobility of the communication device 108 may be stored in the encryption key information 132 and/or the federated network data database 118. On the other hand, if the encryption key exists and has expired, the encryption key may be renewed by the Wi-Fi service federation server 112, and access may be allowed and the mobility of the communication device 108 may be stored in the encryption key information 132 and/or the federated network data database 118. In the event that no encryption key is presented, or the encryption key does not exist in the encryption key information 132, the Wi-Fi service federation server 112 may determine that the communication was not previously enrolled, or has been removed from enrollment at some point, and then proceed by enrolling the communication device 108 with the Wi-Fi service federation. In this latter case, the enrollment instructions 136 may cause the processor 124 of the Wi-Fi service federation server 112 to generate a new and unique encryption key that will only be used by the communication device 108 (e.g., and no other device). This encryption key and the use of the encryption key at a particular venue 110A-110N may be stored in the encryption key information 132 and/or the federated network data database 118. In some embodiments, the Wi-Fi service federation server 112 may provide updated SSID information to the networking systems 106A-106N (e.g., based on the enrollment, etc.) via executing the enrollment instructions 136 via the processor 124. Updated information may be transmitted across the communication network 104 as one or more messages, etc. The methods described in conjunction with Figs. 7-10 may be performed by the Wi-Fi service federation server 112 at least executing the enrollment instructions 136 stored in the memory 128.

The interaction instructions 140 may define rules and instructions for interactions between the Wi-Fi service federation server 112 and at least one of the networking systems 106A-106N and the communication device 108 in the communication system 100. The interaction instructions 140 may cause web pages, pop-ups, and/or other digital interactions to be presented by the display of a communication device 108. The interaction instructions 140, when executed by the processor 124, may determine to present a user 102 with one or more surveys, rewards, or other requests for input. These interactions may be provided by sending a message to the communication device 108 over the communication network 104 in the communication system 100 while the communication device 108 is still connected to a particular networking system 106A-106N. The interaction instructions 140 may work in conjunction with the enrollment instructions 136, or vice versa, to perform at least some steps of the methods described in conjunction with Figs. 7-10 and described herein.

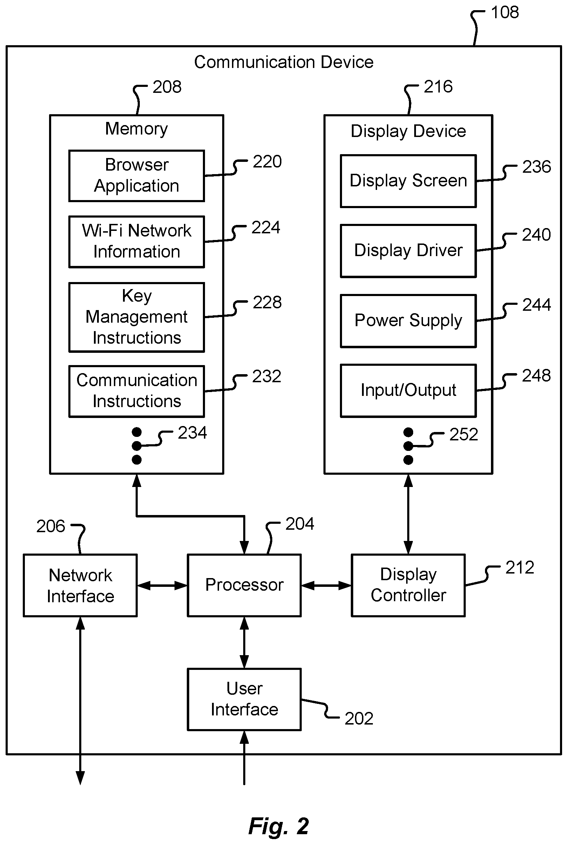

Fig. 2 is a block diagram depicting components of a communication device 108 used in the communication system 100 in accordance with at least some embodiments of the present disclosure. The communication device 108 is shown to include a computer memory 208 that stores one or more instruction sets, applications, information, or modules. The communication device 108 may be configured as a mobile computer, smartphone, and/or the like. The communication device 108 is also shown to include a user interface 202, one or more processors 204, a network interface 206 (e.g., a network communications interface, etc.), and a display controller 212 that may all be connected to one another via a power and/or a communications bus.

The user interface 202 may correspond to any type of input and/or output device, or combination thereof, that enables a user 102 to interact with the communication device 108. As can be appreciated, the nature of the user interface 202 may depend upon the nature of the communication device 108. Examples of the user interface 202 may include, but are in no way limited to, user interface hardware and devices such as at least one touch-sensitive display elements, buttons, switches, keyboards, peripheral interface devices (e.g., mice, controllers, joysticks, etc.) as described herein. It is an aspect of the present disclosure that one or more devices in the user interface 202 may provide an input that is interpreted by the processor 204 in controlling one or more components of the communication device 108.

The processor 204 may correspond to one or many computer processing devices. Non-limiting examples of a processor include a microprocessor, an IC chip, a General Processing Unit ("GPU"), a CPU, or the like. Examples of the processor 204 as described herein may include, but are not limited to, at least one of Qualcomm^{®} Snapdragon@ 800 and 801, Qualcomm^{®} Snapdragon^{®} 620 and 615 with 4G LTE Integration and 64-bit computing, Apple@ A7 processor with 64-bit architecture, Apple^{®} M7 motion coprocessors, Apple^{®} A12 processor with 64-bit architecture, Samsung^{®} Exynos^{®} series, the Intel^{®} Core^{™} family of processors, the Intel^{®} Xeon^{®} family of processors, the Intel^{®} Atom^{™} family of processors, the Intel Itanium^{®} family of processors, Intel^{®} Core^{®} i5-4670K and i7-4770K 22nm Haswell, Intel^{®} Core^{®} i5-3570K 22nm Ivy Bridge, the AMD^{®} FX^{™} family of processors, AMD^{®} FX-4300, FX-6300, and FX-8350 32nm Vishera, AMD^{®} Kaveri processors, ARM^{®} Cortex^{™}-M processors, ARM^{®} Cortex-A and ARM926EJ-S^{™} processors, other industry-equivalent processors, and may perform computational functions using any known or future-developed standard, instruction set, libraries, and/or architecture. The processor 204 may be a multipurpose, programmable device that accepts digital data as input, processes the digital data according to instructions stored in its internal memory, and provides results as output. The processor 204 may implement sequential digital logic as it has internal memory. As with most microprocessors, the processor 204 may operate on numbers and symbols represented in the binary numeral system.

The network interface 206 may comprise hardware that facilitates communications with other communication devices (e.g., the components of the networking systems 106A-106N and/or the conferencing server 112, etc.) over the communication network 104. In some embodiments, the network interface 206 may include a Wi-Fi card, an NIC, a cellular interface (e.g., antenna, filters, and associated circuitry), or the like. The network interface 206 may be configured to facilitate a connection between the Wi-Fi service federation server 112 and the communication network 104 and may further be configured to encode and decode communications (e.g., packets, etc.) according to a protocol utilized by the communication network 104.

The memory 208 may correspond to any type of non-transitory computer-readable medium. In some embodiments, the memory 208 may comprise volatile or non-volatile memory and a controller for the same. Non-limiting examples of memory 212 that may be utilized in the communication device 108 may include RAM, ROM, buffer memory, flash memory, solid-state memory, and/or variants thereof. Any of these memory types may be considered non-transitory computer memory devices even though the data stored thereby can be changed one or more times. In some embodiments, the memory 208 may be configured to store rules and/or the instruction sets depicted in addition to temporarily storing data for the processor 204 to execute various types of routines or functions. The computer memory 208 may store the browser application 220, Wi-Fi network information 224, key management instructions 228, communication instructions 232, and/or more 234.

The browser application 220 stored in the computer memory 208 of the communication device 108 may correspond to any application program that provides access to network (e.g., LAN, Internet, World Wide Web, etc.) content. Examples of the browser application 220 may include, but are in no way limited to, Microsoft^{®} Internet Explorer, Microsoft^{®} Edge, Google^{®} Chrome, Mozilla Firefox^{®}, Apple^{®} Safari, and/or the like. In some embodiments, the browser application 220 may run a browser-based application. The browser-based application may run via the Wi-Fi service federation server 112 and interact with the communication device 108.

The Wi-Fi network information 224 may comprise data about Wi-Fi networks available to, or accessed by, the communication device 108. The Wi-Fi network information 224 may comprise one or more SSIDs, associated passwords, and/or encryption keys for access to a particular SSID. In some embodiments, the Wi-Fi network information 224 may comprise information about a particular wireless network provided by the networking systems 106A-106N of one or more venues 110A-110N. For instance, this information may comprise Wi-Fi addresses, IP addresses, signal strength, configuration information, and/or the like. In some embodiments, when an encryption key is generated by the Wi-Fi service federation server 112, the encryption key and other associated information may be stored with information in the Wi-Fi network information 224.

The key management instructions 228, when executed by the processor 204, may enable the communication device 108 to store an encryption key generated by the Wi-Fi service federation server 112 in response to a connection request by the communication device 108. The key management instructions 228 may associate the encryption key with one or more SSIDs as directed by the Wi-Fi service federation server 112. In some embodiments, the Wi-Fi network information 224 may remove keys from the Wi-Fi network information 224 that have expired or have been deleted. The key management instructions 228 may be a part of a communication device's 108 password and security instructions. In some embodiments, the key management instructions 228, when executed by the processor 204, may update records in the computer memory 208 as directed by the Wi-Fi service federation server 112.

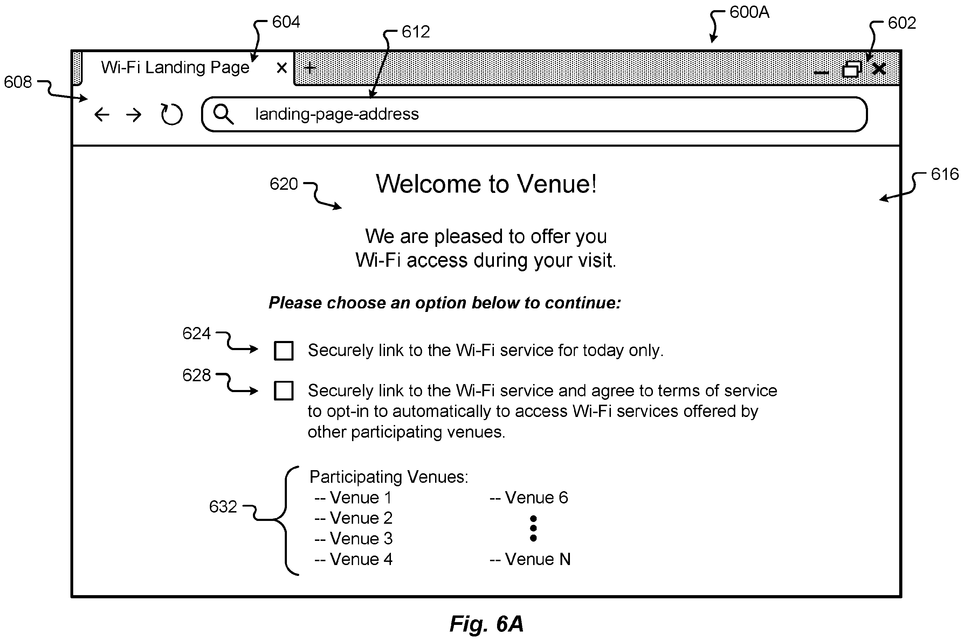

The communication instructions 232, when executed by the processor 204, may enable the communication device 108 to send and receive signals across the communication network 104. The signals may be in the form of messages, alerts, application instructions, and/or the like. For instance, the communication instructions 232, when executed by the processor 204, may cause the browser application 220 to initiate and render one or more interactive presentation pages. In some embodiments, the communication instructions 232 may initiate a pop-up, or other application of the communication device 108, to render an interactive presentation window via the display device 216 of the communication device 108. The interactive presentation windows may correspond to the presentations 600A-600C shown and described in conjunction with Figs. 6A-6C. The communication instructions 232 may manage incoming communications from the Wi-Fi service federation server 112 and/or the networking systems 106A-106N and may also manage outgoing communications from the communication device 108 to one or more of the components of the communication system 100.

In some embodiments, the communication device 108 may comprise at least one display device 216 that renders information, applications, windows, interactive elements, and/or other visual output to at least one display screen 236. The communication device 108 may include at least one display controller 212 that controls an operation of the display device 216. This operation may include the control of input (e.g., input provided by the user 102 via the user interface 202, command input via the instruction sets in memory 208, and/or combinations thereof, etc.), output (e.g., display, rendered images, window behavior, etc.) and/or other functions of the display device 216 and a display controller 212.

As described above, the display device 216 may comprise at least one display screen 236 that selectively activates pixels and/or display elements to render one or more applications, windows, controls, interactive elements, icons, characters, images, etc. Examples of the display screen 236 may include, but are in no way limited to, a Liquid Crystal Display ("LCD"), a Light Emitting Diode ("LED") display, an Electroluminescent Display ("ELD"), an Organic LED ("OLED") display, and/or some other type of display. In some embodiments, the display device 216 may be configured to render information in one or more discrete areas (e.g., areas, backgrounds, portions, windows, zones, etc.) of the display screen 236 or superimposed in an area of the display screen 236.

The display device 216 may include a display driver 240, a power supply 244, an input/output 248, and/or other components 252 that enable operation of the display device 216. The display driver 240 may receive commands and/or other data provided by the processor 204 and one or more of the instruction sets in memory 208. In response to receiving the commands, the display driver 240 may generate the driving signals necessary to render the appropriate images to the display screen 236.

The power supply 244 may provide electric power to one or more components of the display device 216. In one embodiment, the power supply 252 may include a transformer and/or other electronics that prevent overloading, condition power signals, and/or provide backup power to the display device 216. The input/output 248 may correspond to one or more connections for receiving or exchanging information and/or video from components of the communication device 108 (e.g., the processor 204, etc.). The input/output 248 may comprise a high-definition multimedia interface ("HDMI") input, DisplayPort ("DP") input, Ethernet, composite video, component video, H.264, or some other video connection type.

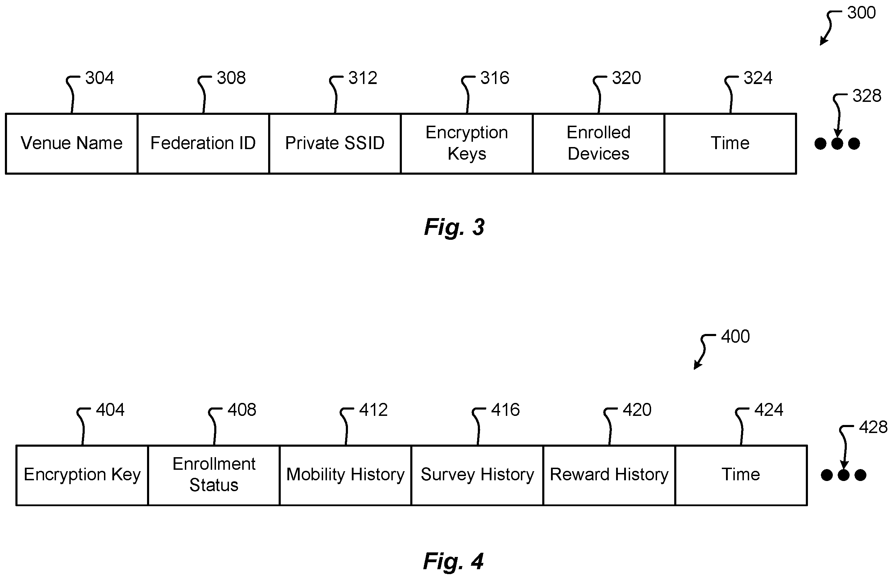

Referring to Fig. 3, a block diagram depicting a venue registration data structure 300 will be described in accordance with at least some embodiments of the present disclosure. The venue registration data structure 300 may include a number of fields that may be used in the various communication flows, methods, and processes outlined herein. For instance, the venue registration data structure 300 shown may be associated with a particular venue 110A-110N that is part of a Wi-Fi service federation. The venue registration data structure 300 may be used by the Wi-Fi service federation server 112 in determining devices enrolled with a particular Wi-Fi service federation, a number of encryption keys issued for a particular venue 110A-110N, and tracking encryption keys for particular wireless network SSIDs. The venue registration data structure 300 may be stored in the federated network data database 118 and/or the memory 128 (e.g., the encryption key information 132, etc.) of the Wi-Fi service federation server 112. Examples of such data fields include, without limitation, a venue name field 304, a federation identification field 308, a private SSID field 312, an encryption keys field 316, an enrolled devices field 320, a time field 324, and more 328.

The venue name field 304 may comprise data used to identify or describe a particular venue 110A-110N in a Wi-Fi service federation. This identification may be at least one name, phrase, word, symbol, number, character, and/or combination thereof. Additionally or alternatively, the identification may include a venue type identifier (e.g., business, park, nonprofit, etc.), timestamps, etc., and/or any other data used to uniquely identify one venue 110A-110N from another in a Wi-Fi service federation stored in the federated network data database 118, in the memory 128, or other memory storage device of the communication system 100.

The federation identification field 308 may comprise data used to identify or describe a particular Wi-Fi service federation, or group of venues 110A-110N, that participate in sharing data and/or wireless network access with enrolled devices. This identification may be at least one name, phrase, word, symbol, number, character, and/or combination thereof. Additionally or alternatively, the identification may include a region identifier (e.g., city, county, state, country, international, etc.), timestamps, etc., and/or any other data used to uniquely identify one Wi-Fi service federation from another. In some embodiments, the Wi-Fi service federation server 112 may organize sets of SSIDs, lists of participating venues 110A-110N, and corresponding enrolled and generated encryption keys by the identification stored in the federation identification field 308. The federation identification field 308 may be stored in the federated network data database 118, in the memory 128, or other memory storage device of the communication system 100.

The private SSID field 312 may comprise data used to identify one or more SSIDs (e.g., SSID set) that are associated with the wireless networks provided by the networking systems 106A-106N of each venues 110A-110N in a Wi-Fi service federation. Each SSID set stored in the private SSID field 312 may be used to identify a private wireless network associated with a respective venues 110A-110N in a Wi-Fi service federation. In some embodiments, when a communication device 108 makes a connection request at a particular venue 110A-110N, the Wi-Fi service federation server 112 may determine the identity of a private wireless network that is provided by the respective networking system 106A-106N at the venue 110A-110N. For instance, the Wi-Fi service federation server 112 may retrieve the SSID set from the venue registration data structure 300 that is stored in the private SSID field 312 for the venue 110A-110N identified in the venue name field 304. Once retrieved, the Wi-Fi service federation server 112 may provide (e.g., send across the communication network 104, etc.) the retrieved SSID set, along with a unique encryption key, to the communication device 108 making the request. In response to receiving the retrieved SSID set, the communication device 108 may be store the SSID set in the Wi-Fi network information 224 of the computer memory 208. Using at least one SSID in the SSID set, the communication device 108 may access the private wireless network associated with the Wi-Fi service federation.

The encryption keys field 316 may comprise unique encryption keys that have been generated for communication devices enrolling with a particular Wi-Fi service federation (e.g., for wireless network access to one or more venues 110A-110N that are associated with a Wi-Fi service federation identified in the federation identification field 308). As described herein, an encryption key is generated by the Wi-Fi service federation server 112 in response to receiving a connection request from a communication device 108. The connection request is initiated when the communication device 108 is located at a particular venue 110A-110N (e.g., within a wireless communication range 114A) and attempting to connect to the wireless network provided by a respective networking system 106A-106N at the particular venue 110A-110N. The encryption key is generated for use only by a single communication device 108 (e.g., the communication device 108 requesting to connect to a wireless network at the venue 110A-110N). Generation of the encryption key may be based on timestamps, a random number (e.g., created by use of a random number generator, etc.), and/or some other key generation algorithm. The encryption key, however, is not based on, and does not include, any personal information of a user 102 of the communication device 108, any hardware identifier of the communication device 108 making the request, and/or any other identifiable information associated with the communication device 108 and/or the user 102. Because the encryption key is unique to the world, access of wireless networks in the Wi-Fi service federation using the unique encryption key can be monitored, tracked, and analyzed by recording when and where the unique encryption key was used. This monitoring, tracking, and analysis can be performed (e.g., by the Wi-Fi service federation server 112, etc.) without using, including, or even relying upon hardware identifiers of the communication device 108 and without private or personal data of the user 102 of the communication device 108. The encryption keys may be sent by the Wi-Fi service federation server 112 to the networking systems 106A-106N to update access authorization codes and enable access for enrolled communication devices 108.

The enrolled devices field 320 may comprise data used to identify a number of enrolled devices with a particular Wi-Fi service federation identified in the federation identification field 308. The enrolled devices field 320 may comprise data used to identify an enrollment of devices with the Wi-Fi service federation over time. In some embodiments, the enrolled devices field 320 may identify changes to enrollment over time including, but in no way limited to, a number of devices enrolled, a number of devices that have been removed from enrollment, and/or the like.

The time field 324 may comprise data associated with a time of the connection request (e.g., from the communication device 108, etc.), a time associated with the generation of the encryption key, a time of enrollment of a communication device 108 with a Wi-Fi service federation, and/or other time-based logs and information. For instance, the time field 324 may include information such as a day, a time of day, month, year, and/or some other absolute or relative measurement of time. This information may be used by the Wi-Fi service federation server 112 in generating encryption keys (e.g., keys based on a time of enrollment, etc.), recording wireless network access by a communication device 108, and/or tracking a mobility of a communication device 108 over time.

Fig. 4 shows a block diagram depicting a device key data structure 400 in accordance with at least some embodiments of the present disclosure. The device key data structure 400 may include a number of fields that may be used in the various communication flows, methods, and processes outlined herein. For instance, it is anticipated that the device key data structure 400 shown may be used as a proxy for a communication device 108 in the communication system 100. Stated another way, the device key data structure 400 may comprise data that represents an activity and/or history of a communication device 108 without identifying the communication device 108, without using information from the communication device 108, and without using information about the user 102 of the communication device 108. The device key data structure 400, or portions thereof, may be used by the communication device 108 in accessing wireless networks in an associated and enrolled Wi-Fi service federation. The device key data structure 400 may be used by the Wi-Fi service federation server 112 in privately and securely monitoring or tracking a mobility and behavior of a communication device 108 without identifiable information. The device key data structure 400, and/or portions thereof, may be stored in the memory 128 of the Wi-Fi service federation server 112, in the computer memory 208 of the communication device 108, and/or in the federated network data database 118. Examples of the data fields in the device key data structure 400 may include, without limitation, an encryption key field 404, an enrollment status field 408, a mobility history field 412, a survey history field 416, a reward field 420, a time field 424, and more 428.

The encryption key field 404 may comprise data that identifies the unique encryption key associated with a communication device 108 in the communication system 100. Rather than identify a communication device 108, the unique encryption key stored in the encryption key field 404 serves as the only identification of the communication device 108. As provided above, the encryption key is not based on, and does not include, any personal information of a user 102 of the communication device 108, any hardware identifier of the communication device 108 making the request, and/or any other identifiable information associated with the communication device 108 and/or the user 102. Because the encryption key is unique to the world, access of wireless networks in the Wi-Fi service federation using the unique encryption key can be monitored, tracked, and analyzed by recording when and where the unique encryption key was used (e.g., to access a particular wireless network in the communication system 100). In addition to being based on information other than device identifiers and personal data, the encryption key cannot be mapped to any device identifiers and personal data. The encryption key is unique and is used only to monitor a mobility of the use of the encryption key from location to location. This mobility naturally corresponds to a mobility of the communication device 108 but is completely private and untraceable.

The enrollment status field 408 may be used to store an enrollment status for the encryption key stored in the encryption key field 404. The status may identify whether the encryption key is currently "enrolled" or "removed from enrollment" with a particular Wi-Fi service federation (e.g., identified in the federation identification field 308 of the venue registration data structure 300). In some embodiments, the enrollment status field 408 may indicate a time for which the enrollment and/or the encryption key is valid. This validity timing and enrollment status may correspond to a TTL for the encryption key with the Wi-Fi service federation. In some embodiments, the enrollment status may indicate that a user 102 has agreed to receive surveys and/or other interactions at the communication device 108 while being enrolled with the Wi-Fi service federation.

The mobility history field 412 may be used to store use of the encryption key (e.g., identified in the encryption key field 404) in the communication system 100. For instance, as the encryption key is used by a communication device 108 to access a wireless network provided by a networking system 106A-106N, the stored when accessing one or more wireless networks in the Wi-Fi service federation over time. The mobility history field 412 may comprise at least one of a time of usage and an identification of a geographical location of usage of the encryption key (e.g., by a communication device 108 in the communication system 100) over time. The identification of the geographical location may correspond to an identity of the venue 110A-110N that hosts the wireless network provided by a particular networking system 106A-106N and that was accessed using the encryption key. The mobility history may define a path of movement, a path of travel, and/or a series of time-linked locations associated with the encryption key and, in turn, the communication device 108 using the encryption key. In some embodiments, the mobility history field 412 may store data about types of venues 110A-110N visited in the communication system 100. For instance, a user 102 may visit a first venue 110A (e.g., a hotel, etc.) and then, later, visit a second venue 110B (e.g., a coffee shop). When the communication device 108 accesses the first wireless network at the first venue 110A, the time and location of the encryption key usage at the first venue 110A may be stored in the mobility history field 412. When the communication device 108 accesses the second wireless network at the second venue 110B, the time and location of the encryption key usage at the second venue 110B may be stored in the mobility history field 412. In one embodiment, the mobility history may be stored as part of a graph database. For example, each node may correspond to an accessed wireless network and/or associated venue 110A-110N, while each edge connecting adjacent nodes may define a mobility from one venue 110A-110N to another. In any event, the mobility history stored in the mobility history field 412 may be analyzed to determine a mobility behavior of users 102 in a communication system 100.

The survey history field 416 may be used to store a history of surveys that have been sent to, and/or completed by, a user 102 of a communication device 108. The history of surveys stored in the survey history field 416 may comprise an identification of surveys sent, surveys completed, survey questions, requested responses, answers provided by a user 102, and/or other input provided by a user 102 in response to a survey. In one embodiment, after a communication device 108 is connected to a wireless network hosted by a venue 110A-110N (e.g., provided by an associated networking system 106A-106N), the Wi-Fi service federation server 112 may send, at some time during the connection, a survey requesting input from the user 102 of the communication device 108. The survey may request input from the user 102 (e.g., to be provided via the user interface 202, etc.) regarding some information about the venue 110A-110N, about a poll, about services provided, about suggested improvements, and/or the like. The surveys, as described herein, may correspond to any message, signal, or interaction sent to a communication device 108 (e.g., by the Wi-Fi service federation server 112, etc.) requesting input from a user 102 of the communication device 108.

The reward history field 420 may be used to store an identification of rewards that have been sent to, collected by, and/or redeemed by, a user 102 of a communication device 108 over time. The data stored in the reward history field 420 may comprise an identification of rewards sent, rewards accepted, rewards saved, rewards rejected, and/or rewards redeemed over time. In one embodiment, after a communication device 108 has completed a survey, the Wi-Fi service federation server 112 may send a reward to the communication device 108. The reward may correspond to a digital coupon, coupon code, discount code, promotional code, and/or some other credit or discount that can be applied to products or services. In some embodiments, the reward may be sent as a text string, numerical string, alphanumerical string, one or more characters, a barcode, a quick response ("QR") code, a two-dimensional code, and/or some other code that can be entered or scanned when making a purchase. For instance, a communication device 108 may receive a QR code for a discount that can be applied at a venue 110A-110N (e.g., that is part of a particular Wi-Fi service federation). Continuing this example, the QR code may be scanned by a scanner reading a display device 216 of the communication device 108 where the QR code is rendered. Once successfully scanned, the scanner and/or the communication device 108 may send a communication signal to the Wi-Fi service federation server 112 that the QR code, and the associated reward, has been redeemed. In response, the communication device 108 and/or the Wi-Fi service federation server 112 may update the data stored in reward history field 420 of the device key data structure 400. This update may indicate recording a time and/or place of the redemption of the reward in the reward history field 420. In some embodiments, the Wi-Fi service federation server 112 may determine the most valued rewards (e.g., those rewards having the highest redemption rate among users 102), the most influential rewards (e.g., those rewards that alter a mobility of the user 102 from a determined mobility based on recording the encryption key uses, etc.), and/or a type of reward previously offered and/or accepted (e.g., collected, saved, and/or redeemed, etc.) by a user 102.

The time field 424 may comprise data associated with one or more times that data in the device key data structure 400 is used, collected, recorded, applied, sent, received, and/or otherwise stored. For example, the time field 424 may include information such as a day, a time of day, a month, a year, and/or some other absolute or relative measurement of time. In one embodiment, when an encryption key stored in the encryption key field 404 is used to access, or attempt to access, a wireless network as described herein, the time of the usage may be stored in the time field 424 of the device key data structure 400. As another example, when a communication device 108 enrolls with a particular Wi-Fi service federation, the time of enrollment may be stored in the time field 424. Additionally or alternatively, the times associated with the mobility history field 412, the survey history field 416, the reward history field 420, and/or more 428 may be stored in the time field 424. Multiple entries for a common field may be stored in the time field 424 to establish a behavior, or record, over time for a respective field in the device key data structure 400.

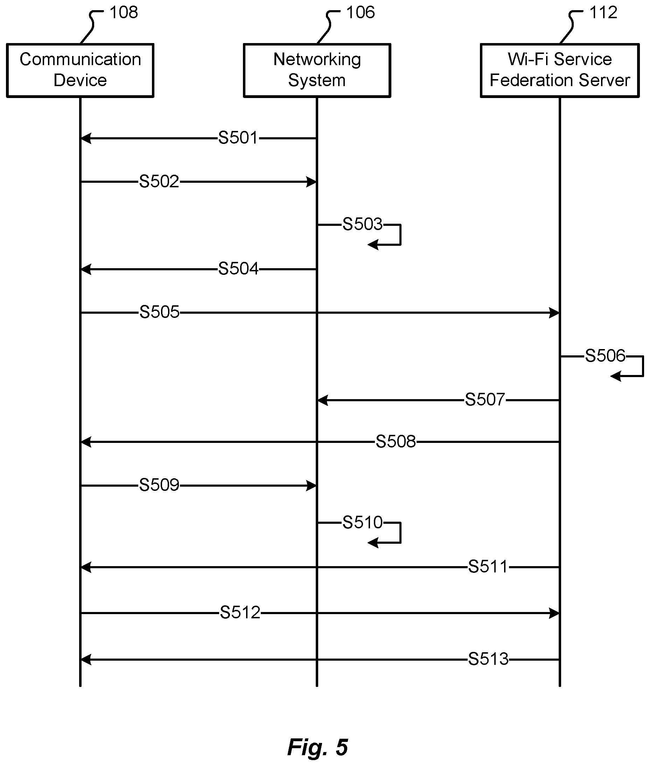

With reference now to Fig. 5, a set of communication flows will be described in accordance with at least some embodiments of the present disclosure. The communication flows begin when a networking system 106 of a venue 110A-110N broadcasts a public SSID of a wireless network provided by the networking system 106 (step S501). In one embodiment, the public SSID may be transmitted and detected by communication devices 108 located in proximity to the wireless network provided by the networking system 106. For example, when a communication device 108 has entered the wireless communication range 114A-114N of a particular networking system 106A-106N, the communication device 108 may discover the public SSID associated with an associated wireless network via the broadcast signal. In some embodiments, the networking system 106 may provide both a public and a separate private wireless network for a venue 110A-110N.

In response to detecting the broadcast signal, the communication device 108 may send an connection signal indicating that the communication device 108 is attempting to connect to the wireless network associated with the public SSID (step S502). The connection signal may correspond to a portion of a communications handshake establishing a communications exchange between the communication device 108 and the networking system 106. The networking system 106 may generate a landing page for the communication device 108 to complete a connection to a private wireless network (step S503). The landing page may be caused to render to the display device 216 of the communication device 108 by an access registration signal sent to the communication device 108 (step S504). In some embodiments, the landing page may be rendered by the communication device 108 as part of an access registration interface presentation 600A as described in conjunction with Fig. 6A. The landing page may provide one or more selection options for a user 102 of the communication device 108 to choose a type of access for a wireless network provided by the networking system 106. One option, when selected, may only grant access for the communication device 108 for a single venue in the venues 110A-110N. Another option, when selected, may allow the user 102 to enroll with a Wi-Fi service federation and gain access to a plurality of private wireless networks provided by the networking systems 106A-106N of multiple member venues 110A-110N.

When a user determines to enroll with the Wi-Fi service federation, the communication device 108 may send a connection request signal to the Wi-Fi service federation server 112 (step S505). In one embodiment, the networking system 106 may send the connection request signal to the Wi-Fi service federation server 112. In any event, the signal may indicate that a user 102 of the networking system 106 has agreed to terms of enrollment with the Wi-Fi service federation (e.g., included via the landing page, etc.).

In response to receiving the connection request signal, the Wi-Fi service federation server 112 may generate an encryption key that is unique for the communication device 108 to use (step S506). In addition to storing the encryption key in a memory 128 of the Wi-Fi service federation server 112, the Wi-Fi service federation server 112 may send a records update signal to the networking system 106, and/or other networking systems 106A-106N in the communication system 100, that includes the encryption key generated (step S507). The Wi-Fi service federation server 112 also provides the encryption key along with a set of SSIDs associated with the Wi-Fi service federation to be stored by the communication device 108 (step S508). In some embodiments, this encryption key and set of SSIDs may be sent directly to the communication device 108 or indirectly via the networking system 106. The encryption key and set of SSIDs may be stored in the key management instructions 228 of the communication device 108.

Using the encryption key received, the communication device 108 may access a private wireless network (provided by the networking system 106) using a private SSID stored in the set of SSIDs received (step S509). This access may be provided automatically via the Wi-Fi management application of the communication device 108. The networking system 106 may proceed by checking the encryption key against acceptable keys, or key portions, stored in a memory (e.g., of a router, access point, etc.) of the networking system 106, on the Wi-Fi service federation server 112, and/or in the federated network data database 118 (step S510). When authorized, the networking system 106 may provide the communication device 108 with access to the private wireless network.

In some embodiments, and while the communication device 108 is connected to the wireless network provided by the networking system 106, the Wi-Fi service federation server 112 may send the communication device 108 a survey or other request for input (step S511). The survey may be rendered as survey interface presentation by a browser application 220 running on the communication device 108. The user 102 of the communication device 108 may provide input via the survey interface presentation that is sent to the Wi-Fi service federation server 112 for storage and/or tracking (step S512). In some embodiments, the Wi-Fi service federation server 112 may send the communication device 108 a reward for completing the survey and/or for participating in enrollment with the Wi-Fi service federation (step S513). This reward may correspond to a digital coupon, coupon code, discount code, promotional code, and/or some other credit or discount that can be applied to products or services. In some embodiments, the reward may be sent in the form of a QR, or other, code as described in conjunction with Fig. 4.

Figs. 6A-6C show block diagrams of different interactive presentations, or browser application windows 604, rendered by a browser application 220 of the communication device 108 in accordance with embodiments of the present disclosure. Each browser application window 604 may be rendered as part of a browser application 220 to a display device 216 of the communication device 108. In some embodiments, the browser application window 604 may comprise one or more window controls 602, navigation controls 608, an address bar 612, and a presentation and/or user interaction area 616. The presentation area 616 may comprise an area of the browser application window 604 that presents user interface areas (e.g., selection buttons, toggle boxes, text boxes, etc.), information areas, and/or other links to pages other than the address listed in the address bar 612 of the landing page. Although shown partitioned into one or more discrete viewing areas, embodiments of the browser application window 604 are not limited to the arrangements and layout shown in Figs. 6A-6C. Additionally or alternatively, the information presented by the interface presentations 600A-600C shown in Figs. 6A-6C may be provided via a pop-up notification, a toast, or other message displayed by the communication device 108 inside or outside of the browser application 220 (e.g., via an OS, or other application of the communication device 108, etc.).

The one or more window controls 602, when selected, may alter a position, size, or appearance of the browser application window 604. In some embodiments, these window controls 602 may include icons that, when selected, minimize the browser application window 604 (e.g., shown by the "_" symbol in the upper right-hand portion of the window 604), alter a window size of the browser application window 604 (e.g., shown by the double-rectangle symbol in the upper right-hand portion of the window 604), and close the browser application window 604 (e.g., shown by the "x" symbol in the upper right-hand portion of the window 604).

The browser application window 604 may include an identification of a page that is rendered in the presentation area 616 (e.g., "Wi-Fi Landing Page," "Wi-Fi Survey Page," "Wi-Fi Reward Page," etc.). As provided above, the browser application window 604 may comprise one or more navigation controls 608. The navigation controls 608 may allow a user 102 to navigate to a previous page, navigate to a subsequent page, and/or reload the current page using discrete icons and, in some cases, by providing a single-click selection. The browser application window 604 may comprise an address bar 612. The address bar 612 may receive an IP address, a website, a network address, and/or some other location on a wireless network (e.g., the communication network 104, etc.). In some embodiments, the address bar 612 may accept search terms, perform a search of various addresses, sites, and/or the like, and provide results of the search in the browser application window 604.

In Fig. 6A, the access registration interface presentation 600A comprises a browser application window 604 displaying a Wi-Fi landing page. As provided above, the landing page may be generated by the networking system 106 in step S503. The presentation area 616 of the Wi-Fi landing page may comprise a landing page information area 620, a first interactive access selection area 624, a second interactive access selection area 628, and a federation service information area 632. The landing page information area 620 may present information about the venue 110A-110N hosting the respective wireless network provided by the venue's networking system 106A-106N. Additionally or alternatively, the landing page information area 620 may include one or more messages, images, instructions, and/or other content that is presented to a user 102 of the communication device 108. Among other things, the landing page information area 620 shown in Fig. 6A comprises a "welcome" statement, a "message," and an "instruction" to select an option to gain access, or securely link, to a Wi-Fi service at the venue 110A-110N.

Both the first interactive access selection area 624 and the second interactive access selection area 628 each comprise a selection check box, or selection option button, that is configured to receive and record an input from a user 102, when selected. For instance, a user 102 may select the selection check box by providing a selection input (e.g., clicking, or touching, etc.) within the border of a respective selection check box. In one embodiment, the user 102 may provide the selection input via the user interface 202 of the communication device 108.

The first interactive access selection area 624 comprises a first selection check box and a message indicating that, by providing a selection input at the first selection check box, Wi-Fi access will be allowed for "today only." In contrast, the second interactive access selection area 628 comprises a second selection check box and a message indicating that, by providing a selection input at the second selection check box, the user 102 agrees with the terms of service that provide Wi-Fi access at the instant venue and automatically provides access to the "Wi-Fi services offered by other participating venues." Selection of the second selection check box associated with the second interactive access selection area 628 may correspond to a wireless access, or connection, request from the communication device 108 that initiates an enrollment of the communication device 108 with the Wi-Fi service federation server 112 and a particular Wi-Fi service federation, as described herein. In some embodiments, the presentation area 616 may comprise a federation service information area 632 that, at least one of, lists one or more participating venues in the Wi-Fi service federation, describes the terms of service of opting-in to automatically access Wi-Fi services offered by participating venues in the Wi-Fi service federation, provides a link to another page, or pop-up, that outlines the terms of service, and/or describes interactions, surveys, and/or rewards offered to the user 102 as a result of opting-in by selection of the second selection check box associated with the second interactive access selection area 628.

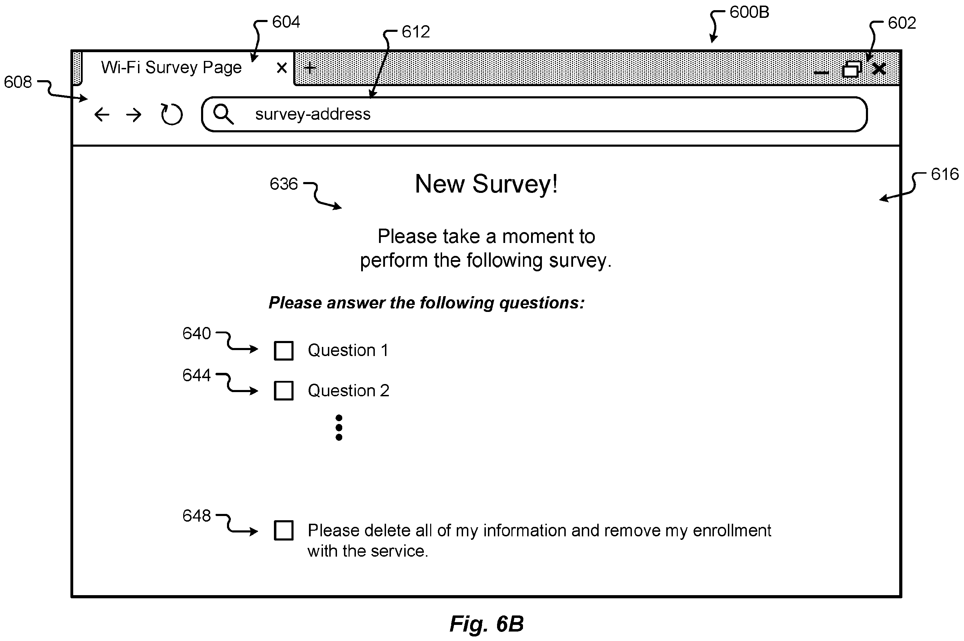

As described herein, when a user 102 enrolls, or registers, with a particular Wi-Fi service federation, the user 102 may receive at their communication device 108 a survey. This survey may be rendered as a browser application window 604 displaying a Wi-Fi survey page as shown in the access survey interface presentation 600B of Fig. 6B. The Wi-Fi survey page may be generated and/or sent by the Wi-Fi service federation server 112, for example, as described in conjunction with step S511 of Fig. 5. In some embodiments, the Wi-Fi survey page may comprise a survey information area 636, first interactive question selection area 640, a second interactive question selection area 644, and an enrollment removal selection area 648. The survey information area 636 may present information about a survey and request for input from the user 102 of the communication device 108. Additionally or alternatively, the survey information area 636 may include one or more messages, images, instructions, and/or other content that is presented to a user 102 of the communication device 108. Among other things, the survey information area 636 shown in Fig. 6B comprises a "new survey" announcement notification and an informational statement requesting that the user 102 "take a moment to perform the following survey." The survey information area 636 includes an "instruction" to users to provide answers via a number of interactive question selection areas 640, 644.

The first interactive question selection area 640 and the second interactive question selection area 644 each comprise a selection check box, or selection option button, that is configured to receive and record an input from a user 102, when selected. Although shown including two questions associated with the survey, more or fewer questions, or requests for input, than shown may be presented to the user 102. For example, a user 102 may select the selection check box by providing a selection input (e.g., clicking, or touching, etc.) within the border of a respective selection check box. In one embodiment, the user 102 may provide the selection input via the user interface 202 of the communication device 108.

In addition to an interactive selection check box, the interactive question selection areas 640, 644 comprise text that identifies a topic of a respective question or request for input. In some embodiments, the interactive selection check box may correspond to a "yes/no," "dropdown option list," a "numbered scale" (e.g., where a user 102 can select a rating, etc., from a list of numbers, etc.), a multiple-answer selection area, an acceptance option indicating that the user agrees with the question or statement, etc., and/or combinations thereof. In some embodiments, once the survey is completed, the answers may be stored in the memory 128 of the Wi-Fi service federation server 112, in the federated network data database 118, and/or some other computer-readable memory storage device of the communication system 100.

In some embodiments, the access survey interface presentation 600B may include an enrollment removal selection area 648 displayed in the presentation area 616 of the browser application window 604. The enrollment removal selection area 648 comprises an associated selection check box and a message indicating that, by providing a selection input at the associated selection check box, any information will be removed from memory (e.g., deleted, etc.) and that enrollment with the Wi-Fi service federation will be removed. In some embodiments, this removal from enrollment may result in the Wi-Fi service federation server 112 deleting the encryption key provided to the communication device 108 that is stored in the venue registration data structure 300, device key data structure 400, the memory 128 of the Wi-Fi service federation server 112, the computer memory 208 of the communication device 108, and/or the federated network data database 118. Any history, mobility, or other information associated with the encryption key may also be deleted when a user 102 selects this check box. After removal, when the user 102 attempts to connect to a wireless network in the Wi-Fi service federation via the communication device 108, the lack of an encryption key stored in the computer memory 208 of the communication device 108 would require the user 102 to re-enroll with the Wi-Fi service federation as described in conjunction with the enrollment methods herein.

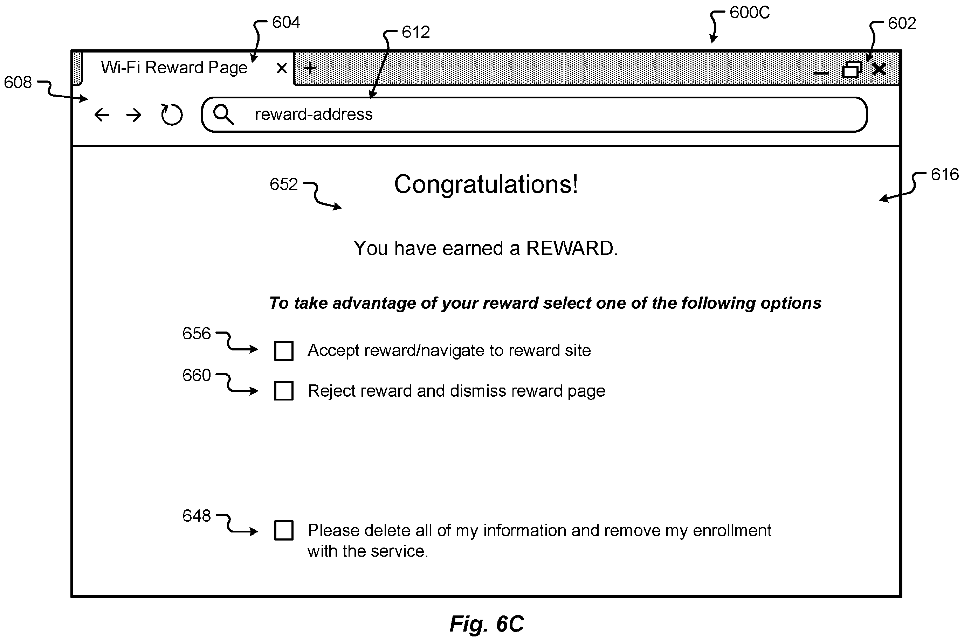

In exchange for completing surveys, accessing wireless networks associated with at least one member venue in a Wi-Fi service federation, allowing mobility information for a communication device 108 to be collected, and/or for opting-in to a particular Wi-Fi service federation, the communication device 108 may be presented with a reward via an access reward interface presentation 600C, as shown in Fig. 6C. This reward may be rendered as a browser application window 604 displaying a Wi-Fi reward page. The Wi-Fi reward page may be generated and/or sent by the Wi-Fi service federation server 112 to the communication device 108, for example, as described in conjunction with step S513 of Fig. 5. In some embodiments, the Wi-Fi reward page may comprise at least one of a reward information area 652, a reward acceptance selection area 656, a reward rejection selection area 660, and/or an enrollment removal selection area 648.

The reward information area 652 may include information about the reward, a code, and/or instructions to receive the reward. The code may be provided in the form of a barcode, alphanumeric string, a text string, a QR code, a link, and/or the like. In one embodiment, the code may be manually or automatically entered and/or scanned. In some embodiments, the reward information area 652 may include one or more messages, images, instructions, links, and/or other content that is presented to a user 102 of the communication device 108. Among other things, the reward information area 652 shown in Fig. 6C comprises a "congratulations" announcement notification and an informational statement that informs the user 102 they have "earned a reward." The user 102 may be presented with one or more options to "accept" or "reject" the reward.

The reward acceptance selection area 656 and the reward rejection selection area 660 each comprise a selection check box, or selection option button, that is configured to receive and record an input from a user 102, when selected. Although shown including two options associated with the reward, more or fewer options or requests for user input may be presented to the user 102. A user 102 may select a desired selection check box by providing a selection input (e.g., clicking, or touching, etc.) within the border of a specific selection check box. In one embodiment, the user 102 may provide the selection input via the user interface 202 of the communication device 108.

The reward acceptance selection area 656 and the reward rejection selection area 660 each comprise a corresponding selection box and text that identifies a respective action associated with the corresponding selection box. For instance, the reward acceptance selection area 656 comprises an acceptance selection box that, when selected, accepts the reward. In some embodiments, acceptance of the reward may cause the presentation area 616 to display a reward code (e.g., QR code, barcode, string of characters, etc.). In one embodiment, acceptance of the reward may cause the browser application 220 to navigate to a reward site to retrieve the reward code and/or the reward. In contrast, the reward rejection selection area 660 comprises a rejection selection box that, when selected, rejects the reward. In some embodiments, rejection of the reward may cause the browser application window 604 to close. Whether the reward is accepted or rejected, the Wi-Fi service federation server 112 may record the input of the user 102 (e.g., accepting or rejecting a reward) in the device key data structure 400 and more specifically in the reward history field 420 described in conjunction with Fig. 4.

The access reward interface presentation 600C may include an enrollment removal selection area 648. As described above, the enrollment removal selection area 648 may correspond to an option for the user 102 to unenroll from, or be removed from an enrollment in, the Wi-Fi service federation. In addition to unenrolling, any information associated with the enrollment may be deleted from the memory 128 of the Wi-Fi service federation server 112, the federated network data database 118, and/or any other memory in the communication system 100.

Fig. 7 is a flow diagram depicting a method 700 of enrolling a communication device 108 with a Wi-Fi service federation in accordance with at least some embodiments of the present disclosure. The method 700 can be executed as a set of computer-executable instructions (e.g., enrollment instructions 136, interaction instructions 140, etc.) executed by a computer system (e.g., the Wi-Fi service federation server 112, etc.) and encoded or stored on a computer readable medium (e.g., the memory 208, etc.). Hereinafter, the method 700 shall be explained with reference to the systems, components, modules, applications, software, data structures, user interfaces, etc. described in conjunction with Figs. 1-6C.

The method 700 may correspond to a first enrollment, or a re-enrollment (e.g., after removal from a Wi-Fi service federation, etc.), of a communication device 108 in a Wi-Fi service federation. The method 700 begins at step 704 and proceeds by receiving a wireless access, or registration, request for a particular networking system 106A-106N (step 708). In some embodiments, wireless access request may correspond to the communication flow associated with step S504 described in conjunction with Fig. 5. For example, as a communication device 108 accepts enrollment with a Wi-Fi service federation via providing an opt-in input (e.g., at the second interactive access selection area 628, etc.) at a landing page, etc., a communication signal is sent from the communication device 108 to the Wi-Fi service federation server 112.

Next, the method 700 may proceed by determining the particular venue 110A-110N and/or the Wi-Fi service federation associated with the networking system 106A-106N where the communication device 108 is making the wireless access request (step 712). In one embodiment, the communication signal from the communication device 108 may correspond to a message that includes an identification of a particular venue 110A-110N, a particular networking system 106A-106N, and/or a particular wireless network provided by the particular networking system 106A-106N. By way of example, the communication signal may comprise an IP address of the networking system 106A-106N where the communication device 108 is located. In response, the Wi-Fi service federation server 112 may refer to the encryption key information 132 and/or the federated network data database 118 to retrieve information about an associated Wi-Fi service federation for the IP address, venue 110A-110N, and/or location of the communication device 108.

The method 700 may continue by generating an encryption key for the communication device 108 (step 716). The encryption key is generated without information from the communication device 108. In one embodiment, the encryption key may be generated using a key generation algorithm, random number generator, and/or some other source of data that does not include information about the user 102 and does not include information about the communication device 108. For example, the encryption key does not use, and is not associated with, a hardware identifier, device identifier, advertising identifier, user personal data, or any other identification information that can be mapped back to the user 102 or the communication device 108.

The generated encryption key may be stored in the encryption key information 132 and/or the federated network data database 118 (step 720). In some embodiments, the encryption key may be stored in a database, list, or other storage location and associated with a particular Wi-Fi service federation (e.g., the Wi-Fi service federation associated with the location of the networking system 106A-106N where the access request originated, etc.) for which the encryption key is valid.

The Wi-Fi service federation server 112 may then send the encryption key and access update to at least the networking system 106A-106N associated with the access request (step 724). This update may provide at least a portion of the encryption key to a wireless router, or access point, in the networking system 106A-106N to update access credentials. When the communication device 108 presents the encryption key to a networking system 106A-106N in the Wi-Fi service federation, the updated access credentials allow the communication device 108 to connect automatically to the corresponding wireless network.

Next, the method 700 continues by the Wi-Fi service federation server 112 sending the encryption key and, in some embodiments, a set of SSIDs associated with the enrolled Wi-Fi service federation to the communication device 108 (step 728). The communication device 108, in response, may automatically store the encryption key and the set of SSIDs in the Wi-Fi network information 224 of the computer memory 208. This allows the communication device 108 to travel to other venues 110A-110N associated with the Wi-Fi service federation and automatically access the wireless networks provided by those other venues 110A-110N.

Subsequently, the method 700 may receive information regarding access made by the communication device 108 at one or more of the venues 110A-110N in the Wi-Fi service federation (step 732). Each time the communication device 108 uses the encryption key to access a particular wireless network provided by a member venue in the Wi-Fi service federation, the Wi-Fi service federation server 112 may record a time, venue identification, and/or location of the wireless access by the encryption key.

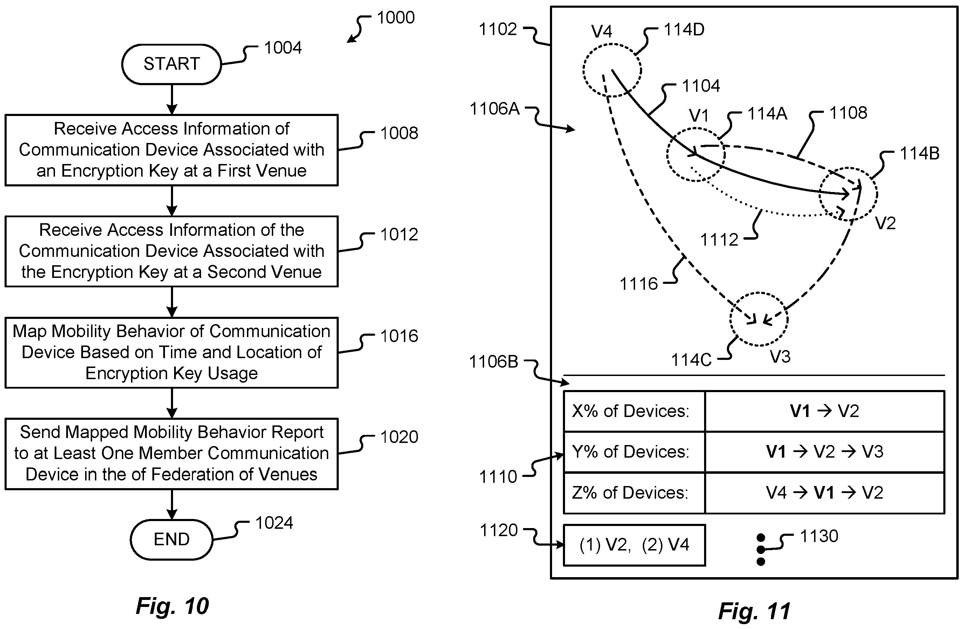

The method 700 continues by mapping the mobility of the communication device 108 with the venues 110A-110N using the recorded times, venue identifications, and locations of the accesses made by the communication device 108 (step 736). In some embodiments, the mobility of the communication device 108 may correspond to a map or sequence of visited venues 110A-110N over time. This mapped mobility may define a mobility behavior for the communication device 108. Additional detail regarding the mapped mobility and mobility behavior are described in conjunction with Figs. 10 and 11. The method 700 may end at step 740.

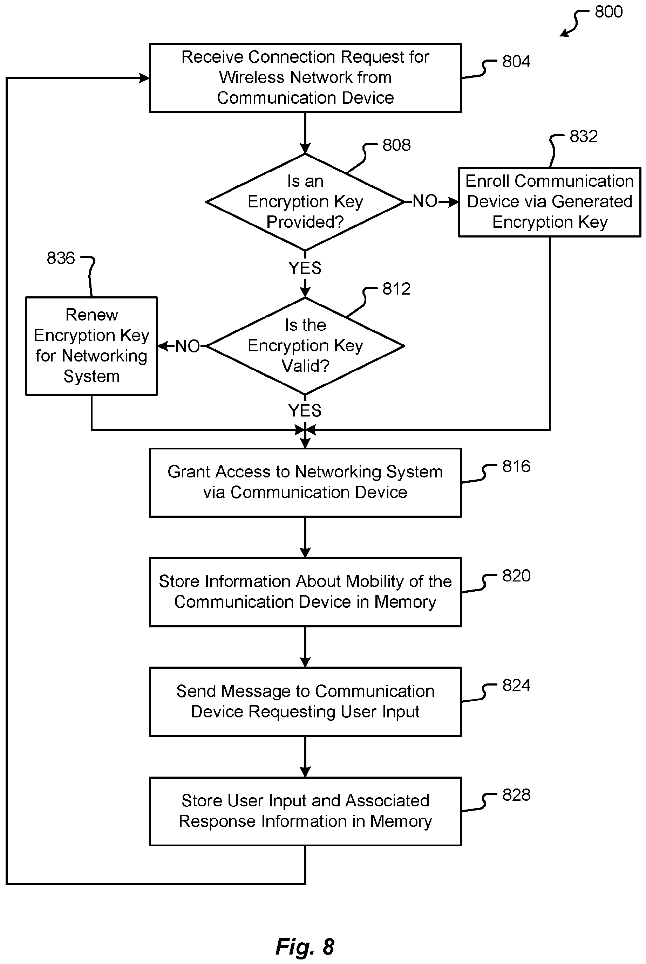

Fig. 8 is a flow diagram depicting a method 800 of granting wireless network access for the communication device 108 enrolled in the Wi-Fi service federation in accordance with embodiments of the present disclosure. The method 800 can be executed as a set of computer-executable instructions (e.g., enrollment instructions 136, interaction instructions 140, etc.) executed by a computer system (e.g., the Wi-Fi service federation server 112, etc.) and encoded or stored on a computer readable medium (e.g., the memory 208, etc.). Hereinafter, the method 800 shall be explained with reference to the systems, components, modules, applications, software, data structures, user interfaces, methods, etc. described in conjunction with Figs. 1-7.

The method 800 begins at step 804 by receiving a connection request for a particular wireless network (e.g., provided by a particular networking system 106A-106N, etc.) from a communication device 108. The connection request may correspond to the wireless access request described in conjunction with step 708 (Fig. 7) and/or the communication flow associated with step S504 (Fig. 5). In one embodiment, in response to the communication device 108 accepting the terms of service associated with opting-in to the Wi-Fi service federation (e.g., via providing input at a landing page of a access registration interface presentation 600A, etc.), the communication device 108 may send a communication signal to the Wi-Fi service federation server 112.

The method 800 continues by determining whether an encryption key has been provided by the communication device 108 in attempting to access the networking system 106A-106N (step 808). As provided above, when a communication device 108 has previously enrolled with a Wi-Fi service federation, an encryption key is generated and provided to the communication device 108 for use with wireless networks of venues 110A-110N in the Wi-Fi service federation. If no encryption key was used by the communication device 108, the method 800 may proceed at step 832, by enrolling the communication device 108 and generating the encryption key for use by the communication device 108. In some embodiments, step 832 may correspond to the enrollment described in conjunction with the method 700 of Fig. 7.

In the event that an encryption key was used by the communication device 108, the method 800 may continue by determining whether the encryption key is valid (step 812). As provided above, the encryption keys generated for some communication devices 108 may expire after a certain amount of time (e.g., a TTL, etc.). The TTL may be stored in a memory 128 of the Wi-Fi service federation server 112, in the federated network data database 118, and/or some other memory of the communication system 100. Among other things, the TTL may prevent communication devices 108 from gaining access to wireless networks after long periods of time and providing "stale" data to the Wi-Fi service federation server 112 regarding mobility, etc.

If the encryption key used by the communication device 108 has expired, the method 800 may proceed to renew the encryption key for the networking systems 106A-106N (step 836). This step may require the communication device 108 to re-enroll with the Wi-Fi service federation, which may correspond to the enrollment described in conjunction with the method 700 of Fig. 7, or an abbreviated re-enrollment where only the TTL is updated.

The method 800 continues, with a valid encryption key, by granting the communication device 108 access to the networking systems 106A-106N that are part of the Wi-Fi service federation (step 816). Although one or more of the steps 804, 808, 812 may be repeated as a communication device 108 attempts to access different networking systems 106A-106N in the Wi-Fi service federation, the process may be automatic when the encryption key is valid or only needs to an abbreviated re-enrollment, as described above.

As the communication device 108 accesses other networking systems 106A-106N associated with different venues 110A-110N in the Wi-Fi service federation, the Wi-Fi service federation server 112 may store mobility information associated with the communication device 108 in the memory 128 and/or the federated network data database 118. This mobility information may correspond to one or more fields of the device key data structure 400 described in conjunction with Fig. 4. For instance, the mobility information may include locations, times, venues 110A-110N visited, lengths of visits, and/or the like, that are associated with the use of a particular encryption key.

The method 800 may proceed by sending a message to the communication device 108 requesting input from a user 102 of the communication device 108 (step 824). This message may correspond to the survey described above. In some embodiments, the message may be sent to the communication device 108 while the communication device 108 is still connected to a wireless network that is provided by a member venue in the Wi-Fi service federation. The message may be presented as a survey in an access survey interface presentation 600B described in conjunction with Fig. 6B. The message may request input from a user 102 regarding services offered, products, opinions, etc.

Once a user 102 provides the input, the Wi-Fi service federation server 112 may store the results in a survey history field 416 or other memory location in the memory 128 and/or the federated network data database 118 (step 828). The surveys and the incentive to complete the surveys (e.g., providing access to wireless networks in the Wi-Fi service federation, rewards, etc.) may provide member venues in the Wi-Fi service federation with rich data from actual users 102 in the communication system 100. The method 800 may repeat when the communication device 108 enters the wireless communication range 114A-114N of a different networking systems 106A-106N in the communication system 100.

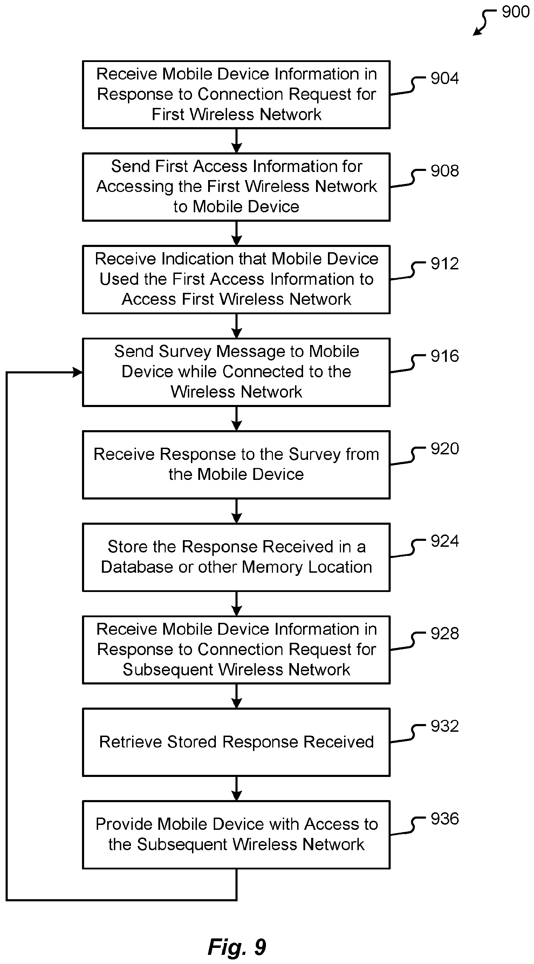

Fig. 9 is a flow diagram depicting a method 900 of monitoring and interacting with the communication device 108 enrolled in the Wi-Fi service federation in accordance with embodiments of the present disclosure. The method 900 can be executed as a set of computer-executable instructions (e.g., enrollment instructions 136, interaction instructions 140, etc.) executed by a computer system (e.g., the Wi-Fi service federation server 112, etc.) and encoded or stored on a computer readable medium (e.g., the memory 208, etc.). Hereinafter, the method 900 shall be explained with reference to the systems, components, modules, applications, software, data structures, user interfaces, methods, etc. described in conjunction with Figs. 1-8.

The method 900 may begin by receiving mobile device (e.g., communication device 108) information in response to a connection request for a first wireless network (step 904). The mobile device information, rather than including device identifiers or personal data, may comprise a location of the communication device 108, a venue identification, and/or a networking system identification provided by the communication device 108. This information may be used to enroll the communication device 108 with a Wi-Fi service federation as described in conjunction with the method 700 of Fig. 7.

In response to the connection request and enrollment, the method 900 may proceed by sending first access information for accessing the first wireless network to the communication device 108 (step 908). The first access information may correspond to the unique encryption key that is generated for the communication device 108 by the Wi-Fi service federation server 112. Additionally or alternatively, the first access information may comprise a set of SSIDs that may be accessed by use of the encryption key and which are part of a particular Wi-Fi service federation. This information may be automatically stored by the communication device 108, for example, in the Wi-Fi network information 224 of the computer memory 208.

Once the communication device 108 uses the first access information to access the first wireless network, a signal may be sent from the communication device 108 and/or the respective networking system 106 to the Wi-Fi service federation server 112 (step 912). The signal may indicate a time of access, a place or location of access, and/or a length of access, along with an identification of the encryption key.

While the communication device 108 is still connected to the first wireless network, the Wi-Fi service federation server 112 may send a survey message to the communication device 108 (step 916). The survey may be presented in the access survey interface presentation 600B described in conjunction with Fig. 6B. In some embodiments, the survey may request input from a user 102 regarding services offered, products, opinions, and/or the like.

The method 900 continues when the response to the survey is received from the communication device 108 (step 920). The response may be received from the communication device 108 by a direct communication, an interaction with a webpage, and/or other interactions hosted by the Wi-Fi service federation server 112. Once received, the response to the survey may be stored in the memory 128 and/or the federated network data database 118 of the communication system 100 (step 924). In some embodiments, the survey and/or responses to the survey may be stored in one or more fields of the device key data structure 400. For example, the survey responses may be stored in the survey history field 416 of the device key data structure 400.

Next, the method 900 may continue by receiving mobile device information in response to a connection request by the communication device 108 for accessing a subsequent wireless network (step 928). The mobile device information, rather than including device identifiers or personal data, may comprise a location of the communication device 108, a venue identification, and/or a networking system identification provided by the communication device 108. In some embodiments, the mobile device information may include the encryption key previously generated by the Wi-Fi service federation server 112. This information may be used to verify that an enrollment of the communication device 108 with a Wi-Fi service federation is still valid.

In some embodiments, the method 900 may proceed by retrieving a stored response received by the user 102 of the communication device 108 (step 932). The stored response may indicate that the user 102 has recently provided input that allows continued access with wireless networks in the Wi-Fi service federation. If the stored response exists, or if the stored response indicates that the user 102 has previously provided input via a survey, the method 900 may continue by providing the communication device with access to the subsequent wireless network in the Wi-Fi service federation. The method 900 may return to step 916 and continue as the communication device 108 connects, or attempts to connect, with other subsequent wireless networks.

Fig. 10 is a flow diagram depicting a method 1000 of mapping a mobility of the communication device 108 enrolled in the Wi-Fi service federation in accordance with embodiments of the present disclosure. The method 1000 can be executed as a set of computer-executable instructions (e.g., enrollment instructions 136, interaction instructions 140, etc.) executed by a computer system (e.g., the Wi-Fi service federation server 112, etc.) and encoded or stored on a computer readable medium (e.g., the memory 208, etc.). Hereinafter, the method 100 shall be explained with reference to the systems, components, modules, applications, software, data structures, user interfaces, methods, etc. described in conjunction with Figs. 1-9.

The method 1000 begins at step 1004 and proceeds by receiving access information of a communication device 108 associated with an encryption key at a first venue 110A (step 1008). The access information may correspond to a time, location, and/or use of the encryption key in accessing a first wireless network provided by the first networking system 106A at the first venue 110A.

Next, the method 1000 may continue by receiving access information of the communication device 108 associated with the encryption key at a second venue 110B (step 1012). The access information provided in step 1012 may correspond to a time, location, and/or use of the encryption key in accessing a second wireless network provided by the second networking system 106B at the second venue 110B. This process of receiving access information of the communication device 108 associated with the encryption key at other venues 110A-110N in the Wi-Fi service federation may continue as the communication device 108 travels from one venues 110A-110N to another.

The method 1000 proceeds by mapping the mobility behavior of the communication device 108 based on the time and location of the encryption key usage associated with steps 1008 and 1012 (step 1016). The mapped mobility behavior may correspond to a description of the mobility of each communication device 108 in a communication system 100. The mapped mobility behavior may be stored in the form of a report comprising locations, dates, times, paths of travel, types of venues visited, and/or other information. An example of this report is shown and described in conjunction with Fig. 11.

In some embodiments, the mapped mobility behavior report may be sent to at least one member communication device in the Wi-Fi service federation (step 1020). For example, a member communication device may include one or more of the components described in conjunction with the communication device 108 of Fig. 2. The member communication device may connect to the communication network 104 and may exchange communications with the Wi-Fi service federation server 112. In one embodiment, the member communication device may receive the mobility behavior report in the form of a mobility behavior report window 1102 rendered by a browser application 220 running on the member communication device. The report may provide a member user of the member communication device with information about user/device behaviors, travel paths, potential marketing partners, competitive marketing efforts, and business opportunities that, absent the mapped mobility behavior, would be otherwise unknown to the member user. The method 1000 may end at step 1024

Fig. 11 is a block diagram depicting a mapped mobility behavior report in accordance with embodiments of the present disclosure. The mapped mobility behavior report may be rendered as part of a window 1102 of a browser application 220. In some embodiments, the mapped mobility behavior report may be sent in a digital interaction between the Wi-Fi service federation server 112 and at least one member communication device. The member communication device may correspond to the device of a subscriber to the information provided by the Wi-Fi service federation server 112. The subscription may correspond to a paid for service by each participating member venue in the venues 110A-110N of a particular Wi-Fi service federation.

The mobility behavior report window 1102 comprises a first report display area 1106A and a second report display area 1106B separated by a horizontal line. The first report display area 1106A comprises a map defining locations of various venues, V1-V4, in a particular Wi-Fi service federation. In addition, the map includes mobility information for various communication devices 108 enrolled in the Wi-Fi service federation. For example, a first mobility path 1104 is associated with a first communication device that has been monitored, tracked, and/or recorded as accessing the wireless network of fourth venue, V4, then the wireless network of first venue, V1, and then the wireless network of second venue, V2. Another example shows a second mobility path 1108 associated with a second communication device that has been monitored as accessing the wireless network of first venue, V1, then the wireless network of second venue, V2, and then accessing the wireless network of third venue, V3. The third mobility path 1112 shows a path of travel for a third communication device that has been monitored as accessing the wireless network of first venue, V1, and then the wireless network of second venue, V2. The fourth mobility path 1116 shows a path of travel for a fourth communication device that has been monitored as accessing the wireless network of fourth venue, V4, and then the wireless network of third venue, V3. In some embodiments, these various mappings may be represent groupings of multiple communication devices 108 moving in the communication system 100 and the Wi-Fi service federation.

The second report display area 1106B comprises an analysis, or summarized analysis, of the mapped mobility behavior rendered in the first report display area 1106A. The second report display area 1106B may comprise a mobility behavior chart 1110, a ranked path venue area 1120, and more 1130. The mobility behavior chart 1110 illustrates that a certain number of devices (e.g., "X" percentage, etc.) enrolled with the Wi-Fi service federation, traveled from first venue, V1, to second venue, V2. The chart 1110 further illustrates that another number of devices (e.g., "Y" percentage, etc.) enrolled with the Wi-Fi service federation, traveled from first venue, V1, to second venue, V2, and then to third venue, V3. The mobility behavior chart 1110 also shows that a number of devices (e.g., "Z" percentage, etc.) enrolled with the Wi-Fi service federation, traveled from fourth venue, V4, then to first venue, V1, and then to second venue, V2.

A member communication device may be able to associate a preferred venue (e.g., first venue, V1, etc.) with the analysis to determine related nodes (e.g., other venues) and edges (e.g., travel paths, etc.) between nodes to determine marketing opportunities, cooperation opportunities, and/or other business opportunities. As shown in Fig. 11, first venue, V1, is shown as the preferred venue and is represented in bold typeface. Based on the preferred venue, the ranked path venue area 1120 may determine an rank of other venues with which the preferred venue is linked. In the ranked path venue area 1120, second venue, V2, is shown in the first (e.g., highest) ranked position, because (as shown in the map of the first report display area 1106A and the mobility behavior chart 1110) most of the communication devices 108 that visit first venue, V1, also visit second venue, V2. Ranked path venue area 1120 also shows fourth venue, V4, in the second (e.g., the next highest) ranked position, because, as shown in the map of the first report display area 1106A and the mobility behavior chart 1110) a number of communication devices 108 travel from fourth venue, V4, to first venue, V1.

Based on the information in the mobility behavior report and window 1102, the member user may determine for their preferred venue (e.g., first venue, V1, etc.) that relationships between second venue, V2, and fourth venue, V4, may be beneficial to business. In one embodiment, the member user of first venue, V1, may work with the member users of second and fourth venues, V2, V4, to establish cooperative rewards, incentives for visiting each other's businesses, and/or the like. Additionally or alternatively, based on the information in the mobility behavior report and window 1102, the member user may determine for their preferred venue (e.g., first venue, V1, etc.) that their venue should offer products or services that are offered by second venue, V2, and/or fourth venue, V4. In this way, first venue, V1, may capitalize on opportunities lost to second and fourth venues, V2, V4. As can be appreciated, the mobility behavior report can offer a business enhanced information and data on the mobility of users without ever collecting personal data, hardware or device identifiers, and without requiring any anonymization of data collected. All of the mobility information is based the use of encryption keys that are unique to a single device and cannot be mapped back to personal data of any kind.

Any of the steps, functions, and operations discussed herein can be performed continuously and automatically.

The exemplary systems and methods of this disclosure have been described in relation to communication devices, Wi-Fi services, and communication systems. However, to avoid unnecessarily obscuring the present disclosure, the preceding description omits a number of known structures and devices. This omission is not to be construed as a limitation of the scope of the claimed disclosure. Specific details are set forth to provide an understanding of the present disclosure. It should, however, be appreciated that the present disclosure may be practiced in a variety of ways beyond the specific detail set forth herein. For instance, while described in conjunction with client-server networks (e.g., conferencing servers, client devices, etc.), it should be appreciated that the components, systems, and/or methods described herein may be employed as part of a peer-to-peer network or other network. As can be appreciated, in a peer-to-peer network, the various components or systems described in conjunction with the communication system 100 may be part of one or more endpoints, or computers, participating in the peer-to-peer network.

Furthermore, while the exemplary embodiments illustrated herein show the various components of the system collocated, certain components of the system can be located remotely, at distant portions of a distributed network, such as a LAN and/or the Internet, or within a dedicated system. Thus, it should be appreciated, that the components of the system can be combined into one or more devices, such as a server, communication device, or collocated on a particular node of a distributed network, such as an analog and/or digital telecommunications network, a packet-switched network, or a circuit-switched network. It will be appreciated from the preceding description, and for reasons of computational efficiency, that the components of the system can be arranged at any location within a distributed network of components without affecting the operation of the system. For example, the various components can be located in a switch such as a PBX and media server, gateway, in one or more communications devices, at one or more users' premises, or some combination thereof. Similarly, one or more functional portions of the system could be distributed between a telecommunications device(s) and an associated computing device.

Furthermore, it should be appreciated that the various links connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire, and fiber optics, and may take the form of acoustic or light waves, such as those generated during radio-wave and infra-red data communications.

While the flowcharts have been discussed and illustrated in relation to a particular sequence of events, it should be appreciated that changes, additions, and omissions to this sequence can occur without materially affecting the operation of the disclosed embodiments, configuration, and aspects.

A number of variations and modifications of the disclosure can be used. It would be possible to provide for some features of the disclosure without providing others.

In yet another embodiment, the systems and methods of this disclosure can be implemented in conjunction with a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this disclosure. Exemplary hardware that can be used for the present disclosure includes computers, handheld devices, telephones (e.g., cellular, Internet enabled, digital, analog, hybrids, and others), and other hardware known in the art. Some of these devices include processors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein.

In yet another embodiment, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this disclosure is dependent on the speed and/or efficiency requirements of the system, the particular function, and the particular software or hardware systems or microprocessor or microcomputer systems being utilized.

In yet another embodiment, the disclosed methods may be partially implemented in software that can be stored on a storage medium, executed on programmed general-purpose computer with the cooperation of a controller and memory, a special purpose computer, a microprocessor, or the like. In these instances, the systems and methods of this disclosure can be implemented as a program embedded on a personal computer such as an applet, JAVA^{®} or CGI script, as a resource residing on a server or computer workstation, as a routine embedded in a dedicated measurement system, system component, or the like. The system can also be implemented by physically incorporating the system and/or method into a software and/or hardware system.

Although the present disclosure describes components and functions implemented in the embodiments with reference to particular standards and protocols, the disclosure is not limited to such standards and protocols. Other similar standards and protocols not mentioned herein are in existence and are considered to be included in the present disclosure. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present disclosure.

The present disclosure, in various embodiments, configurations, and aspects, includes components, methods, processes, systems and/or apparatus substantially as depicted and described herein, including various embodiments, subcombinations, and subsets thereof. Those of skill in the art will understand how to make and use the systems and methods disclosed herein after understanding the present disclosure. The present disclosure, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease, and/or reducing cost of implementation.

The foregoing discussion of the disclosure has been presented for purposes of illustration and description. The foregoing is not intended to limit the disclosure to the form or forms disclosed herein. In the foregoing Detailed Description for example, various features of the disclosure are grouped together in one or more embodiments, configurations, or aspects for the purpose of streamlining the disclosure. The features of the embodiments, configurations, or aspects of the disclosure may be combined in alternate embodiments, configurations, or aspects other than those discussed above. This method of disclosure is not to be interpreted as reflecting an intention that the claimed disclosure requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the disclosure.

Moreover, though the description of the disclosure has included description of one or more embodiments, configurations, or aspects and certain variations and modifications, other variations, combinations, and modifications are within the scope of the disclosure, e.g., as may be within the skill and knowledge of those in the art, after understanding the present disclosure. It is intended to obtain rights, which include alternative embodiments, configurations, or aspects to the extent permitted, including alternate, interchangeable and/or equivalent structures, functions, ranges, or steps to those claimed, whether or not such alternate, interchangeable and/or equivalent structures, functions, ranges, or steps are disclosed herein, and without intending to publicly dedicate any patentable subject matter.

Embodiments of the present disclosure include a method of enabling access to a plurality of wireless networks, the method comprising: receiving, at a first time, mobile device identification information in response to a mobile device requesting access to a first wireless network; providing the mobile device with first access information for accessing the first wireless network; receiving an indication that the mobile device used the first access information to obtain access to the first wireless network; providing the mobile device with a survey while the mobile device is connected to the first wireless network; receiving a response to the survey from the mobile device; storing the response in a database; receiving, at a second time following the first time, the mobile device identification information in response to the mobile device requesting access to a second wireless network; retrieving the response from the database; providing the mobile device with access to the second network based on information contained in the response retrieved from the database.

Aspects of the above method include wherein the information contained in the response comprises an access certificate created in response to the mobile device completing the survey and wherein the access certificate comprises information that enables the mobile device to access the second wireless network. Aspects of the above method include wherein access credentials used to access the first wireless network are also used to access the second wireless network and wherein the first wireless network is different from the second wireless network. Aspects of the above method further comprise: providing the mobile device with a second survey while the mobile device is connected to the second wireless network; providing the mobile device with an additional access certificate to use for accessing another wireless network at a time following the second time; receiving a second response to the second survey; and storing the second response in the database with an association to the response already stored in the database.

Embodiments of the present disclosure include a wireless network service federation server, comprising: a network communications interface; a processor coupled to the network communications interface; and a memory coupled to and readable by the processor and storing therein instructions that, when executed by the processor, cause the processor to: receive, at a first time from a communication device, a connection request for a first wireless network; determine, based on information in the connection request, a venue associated with the first wireless network; generate an encryption key for the communication device that provides access to the first wireless network, wherein the encryption key uniquely identifies the communication device without any device information and without any personal information of a user of the communication device; send, across a wireless communication network, the encryption key to the communication device; receive information that the communication device is accessing the first wireless network; send a message to the communication device requesting input from the user of the communication device; receive a response to the message sent from the communication device; and store the response to the message sent in a memory location associated with the encryption key uniquely identifies the communication device.

Aspects of the above server include wherein after generating the encryption key for the communication device, the instructions, when executed by the processor, further cause the processor to: send information about the encryption key to a wireless router of the first wireless network and update permissions for the first wireless network. Aspects of the above server include. Aspects of the above server include wherein the instructions, when executed by the processor, further cause the processor to: receive, at a second time after the first time from the communication device, a connection request for a second wireless network; determine whether the encryption key for the communication device is valid for providing access to the second wireless network; grant access to the second wireless network when the encryption key for the communication device is valid; and map a mobility of the communication device between the first wireless network and the second wireless network based on the use of the encryption key for the communication device. Aspects of the above server include wherein the instructions, when executed by the processor, further cause the processor to: update the encryption key for providing access to the second wireless network when the encryption key for the communication device is determined to be invalid; and send information about the updated encryption key to at least one of the communication device and a wireless router of the first wireless network granting access for the communication device using the encryption key. Aspects of the above server include wherein the message sent to the communication device comprises a survey, and wherein the input from the user of the communication device comprises an opinion of the user of the communication device. Aspects of the above server include wherein mapping the mobility of the communications device comprises determining a time-based order of venues visited by the communication device based on use of the encryption key accessing at least one wireless network in a service federation of venues. Aspects of the above server include wherein the instructions, when executed by the processor, further cause the processor to: generate, based on the time-based order of venues visited by the communication device, a mobility behavior report comprising an identification of at least one venue visited prior to and after visiting a predetermined venue; and send the mobility behavior report to a member communication device of the service federation of venues and associated with the predetermined venue. Aspects of the above server include wherein the mobility behavior report is configured to be rendered by a display device of the member communication device, and wherein the mobility behavior report defines a number of devices that proceed to a second venue after visiting the predetermined venue and provide additional information about the second venue.

Embodiments of the present disclosure include a method, comprising: receiving, at a first time from a communication device, a connection request for a first wireless network; determining, by a processor based on information in the connection request, a venue associated with the first wireless network; generating, by the processor, an encryption key for the communication device that provides access to the first wireless network, wherein the encryption key uniquely identifies the communication device without any device information and without any personal information of a user of the communication device; sending, by the processor across a wireless communication network, the encryption key to the communication device; receiving, by the processor, information that the communication device is accessing the first wireless network; sending, by the processor, a message to the communication device requesting input from the user of the communication device; receiving, by the processor, a response to the message sent from the communication device; and storing, by the processor, the response to the message sent in a memory location associated with the encryption key uniquely identifies the communication device.

Aspects of the above method include wherein after generating the encryption key for the communication device, the method further comprises: sending, via the processor, information about the encryption key to a wireless router of the first wireless network updating permissions for the first wireless network at the wireless router. Aspects of the above method further comprise: receiving, by the processor at a second time after the first time from the communication device, a connection request for a second wireless network; determining, by the processor, whether the encryption key for the communication device is valid for providing access to the second wireless network; granting, by the processor, access to the second wireless network when the encryption key for the communication device is valid; and mapping, by the processor, a mobility of the communication device between the first wireless network and the second wireless network based on the use of the encryption key for the communication device. Aspects of the above method further comprise: updating, by the processor, the encryption key for providing access to the second wireless network when the encryption key for the communication device is determined to be invalid; and sending, by the processor, information about the updated encryption key to at least one of the communication device and a wireless router of the first wireless network granting access for the communication device using the encryption key. Aspects of the above method include wherein the message sent to the communication device comprises a survey, and wherein the input from the user of the communication device comprises an opinion of the user of the communication device. Aspects of the above method include wherein mapping the mobility of the communications device comprises determining, by the processor, a time-based order of venues visited by the communication device based on use of the encryption key accessing at least one wireless network in a service federation of venues. Aspects of the above method further comprise: generating, by the processor, based on the time-based order of venues visited by the communication device, a mobility behavior report comprising an identification of at least one venue visited prior to and after visiting a predetermined venue; and sending, by the processor, the mobility behavior report to a member communication device of the service federation of venues and associated with the predetermined venue. Aspects of the above method include wherein the mobility behavior report is configured to be rendered by a display device of the member communication device, and wherein the mobility behavior report defines a number of devices that proceed to a second venue after visiting the predetermined venue and provide additional information about the second venue.

Any one or more of the aspects/embodiments as substantially disclosed herein.

Any one or more of the aspects/embodiments as substantially disclosed herein optionally in combination with any one or more other aspects/embodiments as substantially disclosed herein.

One or means adapted to perform any one or more of the above aspects/embodiments as substantially disclosed herein.

The phrases "at least one," "one or more," "or," and "and/or" are open-ended expressions that are both conjunctive and disjunctive in operation. For example, each of the expressions "at least one of A, B and C," "at least one of A, B, or C," "one or more of A, B, and C," "one or more of A, B, or C," "A, B, and/or C," and "A, B, or C" means A alone, B alone, C alone, A and B together, A and C together, B and C together, or A, B and C together.

The term "a" or "an" entity refers to one or more of that entity. As such, the terms "a" (or "an"), "one or more," and "at least one" can be used interchangeably herein. It is also to be noted that the terms "comprising," "including," and "having" can be used interchangeably.

The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

Aspects of the present disclosure may take the form of an embodiment that is entirely hardware, an embodiment that is entirely software (including firmware, resident software, microcode, etc.) or an embodiment combining software and hardware aspects that may all generally be referred to herein as a "circuit," "module," or "system." Any combination of one or more computer-readable medium(s) may be utilized. The computer-readable medium may be a computer-readable signal medium or a computer-readable storage medium.

The term "computer-readable medium" as used herein refers to any tangible storage and/or transmission medium that participate in providing instructions to a processor for execution. Such a medium may take many forms, including but not limited to, non-volatile media, volatile media, and transmission media. Non-volatile media includes, for example, NVRAM, or magnetic or optical disks. Volatile media includes dynamic memory, such as main memory. Common forms of computer-readable media include, for example, a floppy disk, a flexible disk, hard disk, magnetic tape, or any other magnetic medium, magneto-optical medium, a CD-ROM, any other optical medium, punch cards, paper tape, any other physical medium with patterns of holes, a RAM, a PROM, and EPROM, a FLASH-EPROM, a solid state medium like a memory card, any other memory chip or cartridge, a carrier wave as described hereinafter, or any other medium from which a computer can read. A digital file attachment to e-mail or other self-contained information archive or set of archives is considered a distribution medium equivalent to a tangible storage medium. When the computer-readable media is configured as a database, it is to be understood that the database may be any type of database, such as relational, hierarchical, object-oriented, and/or the like. Accordingly, the disclosure is considered to include a tangible storage medium or distribution medium and prior art-recognized equivalents and successor media, in which the software implementations of the present disclosure are stored.

A "computer readable signal" medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable medium may be transmitted using any appropriate medium, including but not limited to wireless, wireline, optical fiber cable, RF, etc., or any suitable combination of the foregoing.

The terms "determine," "calculate," "compute," and variations thereof, as used herein, are used interchangeably and include any type of methodology, process, mathematical operation or technique.

It shall be understood that the term "means" as used herein shall be given its broadest possible interpretation in accordance with 35 U.S.C., Section 112, Paragraph 6. Accordingly, a claim incorporating the term "means" shall cover all structures, materials, or acts set forth herein, and all of the equivalents thereof. Further, the structures, materials or acts and the equivalents thereof shall include all those described in the summary of the disclosure, brief description of the drawings, detailed description, abstract, and claims themselves.

Examples of the processors as described herein may include, but are not limited to, at least one of Qualcomm^{®} Snapdragon^{®} 800 and 801, Qualcomm^{®} Snapdragon^{®} 610 and 615 with 4G LTE Integration and 64-bit computing, Apple@ A7 processor with 64-bit architecture, Apple^{®} M7 motion coprocessors, Samsung^{®} Exynos^{®} series, the Intel^{®} Core^{™} family of processors, the Intel^{®} Xeon^{®} family of processors, the Intel^{®} Atom^{™} family of processors, the Intel Itanium^{®} family of processors, Intel^{®} Core^{®} i5-4670K and i7-4770K 22nm Haswell, Intel^{®} Core^{®} i5-3570K 22nm Ivy Bridge, the AMD^{®} FX^{™} family of processors, AMD^{®} FX-4300, FX-6300, and FX-8350 32nm Vishera, AMD^{®} Kaveri processors, ARM^{®} Cortex^{™}-M processors, ARM^{®} Cortex-A and ARM926EJ-S^{™} processors, other industry-equivalent processors, and may perform computational functions using any known or future-developed standard, instruction set, libraries, and/or architecture.

Methods described or claimed herein can be performed with traditional executable instruction sets that are finite and operate on a fixed set of inputs to provide one or more defined outputs. Alternatively or additionally, methods described or claimed herein can be performed using AI, machine learning, neural networks, or the like. In other words, a system or server is contemplated to include finite instruction sets and/or artificial intelligence-based models/neural networks to perform some or all of the steps described herein.

## Claims

1. A method of enabling access to a plurality of wireless networks, the method comprising:
receiving, at a first time, mobile device identification information in response to a mobile device requesting access to a first wireless network;
providing the mobile device with first access information for accessing the first wireless network;
receiving an indication that the mobile device used the first access information to obtain access to the first wireless network;
providing the mobile device with a survey while the mobile device is connected to the first wireless network;
receiving a response to the survey from the mobile device;
storing the response in a database;
receiving, at a second time following the first time, the mobile device identification information in response to the mobile device requesting access to a second wireless network;
retrieving the response from the database;
providing the mobile device with access to the second network based on information contained in the response retrieved from the database.

2. The method of claim 1, wherein the information contained in the response comprises an access certificate created in response to the mobile device completing the survey and wherein the access certificate comprises information that enables the mobile device to access the second wireless network.

3. The method of claim 1 or claim 2, wherein access credentials used to access the first wireless network are also used to access the second wireless network and wherein the first wireless network is different from the second wireless network.

4. The method of any one of claims 1 to 3, further comprising:
providing the mobile device with a second survey while the mobile device is connected to the second wireless network;
providing the mobile device with an additional access certificate to use for accessing another wireless network at a time following the second time;
receiving a second response to the second survey; and
storing the second response in the database with an association to the response already stored in the database.

5. A wireless network service federation server, comprising:
a network communications interface;
a processor coupled to the network communications interface; and
a memory coupled to and readable by the processor and storing therein instructions that, when executed by the processor, cause the processor to:
receive, at a first time from a communication device, a connection request for a first wireless network;
determine, based on information in the connection request, a venue associated with the first wireless network;
generate an encryption key for the communication device that provides access to the first wireless network, wherein the encryption key uniquely identifies the communication device without any device information and without any personal information of a user of the communication device;
send, across a wireless communication network, the encryption key to the communication device;
receive information that the communication device is accessing the first wireless network;
send a message to the communication device requesting input from the user of the communication device;
receive a response to the message sent from the communication device; and
store the response to the message sent in a memory location associated with the encryption key uniquely identifies the communication device.

6. The server of claim 5, wherein after generating the encryption key for the communication device, the instructions, when executed by the processor, further cause the processor to:
send information about the encryption key to a wireless router of the first wireless network and update permissions for the first wireless network.

7. The server of claim 5 or claim 6, wherein the instructions, when executed by the processor, further cause the processor to:
receive, at a second time after the first time from the communication device, a connection request for a second wireless network;
determine whether the encryption key for the communication device is valid for providing access to the second wireless network;
grant access to the second wireless network when the encryption key for the communication device is valid; and
map a mobility of the communication device between the first wireless network and the second wireless network based on the use of the encryption key for the communication device.

8. The server of claim 7, wherein the instructions, when executed by the processor, further cause the processor to:
update the encryption key for providing access to the second wireless network when the encryption key for the communication device is determined to be invalid; and
send information about the updated encryption key to at least one of the communication device and a wireless router of the first wireless network granting access for the communication device using the encryption key.

9. The server of claim 7 or claim 8, wherein the message sent to the communication device comprises a survey, and wherein the input from the user of the communication device comprises an opinion of the user of the communication device.

10. The server of any one of claims 7 to 9, wherein mapping the mobility of the communications device comprises determining a time-based order of venues visited by the communication device based on use of the encryption key accessing at least one wireless network in a service federation of venues.

11. The server of claim 10, wherein the instructions, when executed by the processor, further cause the processor to:
generate, based on the time-based order of venues visited by the communication device, a mobility behavior report comprising an identification of at least one venue visited prior to and after visiting a predetermined venue; and
send the mobility behavior report to a member communication device of the service federation of venues and associated with the predetermined venue.

12. The server of claim 11, wherein the mobility behavior report is configured to be rendered by a display device of the member communication device, and wherein the mobility behavior report defines a number of devices that proceed to a second venue after visiting the predetermined venue and provide additional information about the second venue.

13. A method, comprising:
receiving, at a first time from a communication device, a connection request for a first wireless network;
determining, by a processor based on information in the connection request, a venue associated with the first wireless network;
generating, by the processor, an encryption key for the communication device that provides access to the first wireless network, wherein the encryption key uniquely identifies the communication device without any device information and without any personal information of a user of the communication device;
sending, by the processor across a wireless communication network, the encryption key to the communication device;
receiving, by the processor, information that the communication device is accessing the first wireless network;
sending, by the processor, a message to the communication device requesting input from the user of the communication device;
receiving, by the processor, a response to the message sent from the communication device; and
storing, by the processor, the response to the message sent in a memory location associated with the encryption key uniquely identifies the communication device.

14. The method of claim 13, wherein after generating the encryption key for the communication device, the method further comprises:
sending, via the processor, information about the encryption key to a wireless router of the first wireless network updating permissions for the first wireless network at the wireless router.

15. The method of claim 13 or claim 14, further comprising:
receiving, by the processor at a second time after the first time from the communication device, a connection request for a second wireless network;
determining, by the processor, whether the encryption key for the communication device is valid for providing access to the second wireless network;
granting, by the processor, access to the second wireless network when the encryption key for the communication device is valid; and
mapping, by the processor, a mobility of the communication device between the first wireless network and the second wireless network based on the use of the encryption key for the communication device.
